# EUROPÄISCHE PATENTANMELDUNG

(11) **EP 2 522 986 A1**
(43) Veröffentlichungstag der Anmeldung: **14.11.2012**
(21) Anmeldenummer: 11010185.4
(22) Anmeldetag: 03.03.2006
(51) Int. Cl.: G01N 21/64, A61B 3/10

(54) **Fluoreszenzmessgerät**

(30) Priorität: 03.03.2005 DE 102005010981
(62) Teilanmeldung aus: 06723196.9
(71) Anmelder: QIAGEN Lake Constance GmbH, 78333 Stockach (DE)
(72) Erfinder: Gruler, Roman, 78628 Rottweil (DE)
(74) Vertreter: Hössle Patentanwälte Partnerschaft

(57) **Zusammenfassung**

Fluoreszenzmessgerät zur Untersuchung einer Probe (3), das einen Hauptstrahlengang (5) und mindestens ein optisches Modul aufweist und dazu ausgebildet ist, mindestens einen zur Anregung der Probe vorgesehenen elektromagnetischen Strahl (27) bereitzustellen sowie mindestens einen von der Probe emittierten elektromagnetischen Strahl (29, 31) zu empfangen, wobei mindestens zwei dieser elektromagnetischen Strahlen zumindest abschnittsweise in einer Ebene liegen und entlang dem Hauptstrahlengang verlaufen.

## Beschreibung

Die Erfindung betrifft ein Fluoreszenzmessgerät zur Untersuchung einer Probe, ein Verfahren zur Untersuchung einer Probe, ein Computerprogramm mit Programmcodemitteln und ein Computerprogrammprodukt mit Programmcodemitteln.

Fluorimeter zur Untersuchung von Proben und Objekten sind bekannt. Allerdings sind bekannte Fluorimeter in der Regel derart ausgebildet, dass sie nur eine geringe Tiefenschärfe haben und daher in genauem Abstand zu der zu untersuchenden Ebene positioniert werden müssen.

Vor diesem Hintergrund werden ein Fluoreszenzmessgerät, ein Verfahren, ein Computerprogramm und ein Computerprogrammprodukt vorgestellt.

Das erfindungsgemäße Fluoreszenzmessgerät zur Untersuchung einer Probe weist einen Hauptstrahlengang und mindestens ein optisches Modul auf und ist dazu ausgebildet, mindestens einen zur Anregung der Probe vorgesehenen elektromagnetischen Strahl bereitzustellen sowie mindestens einen von der Probe emittierten elektromagnetischen Strahl zu empfangen, wobei mindestens zwei dieser elektromagnetischen Strahlen zumindest abschnittsweise in einer Ebene liegen und entlang dem Hauptstrahlengang verlaufen. Mit diesem Fluoreszenzmessgerät ist es nunmehr möglich, bei der Untersuchung der Probe, mit großer Tiefenschärfe zu messen.

Das erfindungsgemäße Fluoreszenzmessgerät stellt ein sensitives, tolerantes und kleines Messgerät dar, mit dem in Proben beliebiger Art gemessen werden kann. So können sowohl Messungen an Oberflächen als auch Messungen in dünnen Schichten, mit Teststreifen sowie in sogenannten PCR-Tubes durchgeführt werden.

Das erfindungsgemäße Fluoreszenzmessgerät weist mindestens eine, insbesondere zwei, Quellen zur Bereitstellung elektromagnetischer Strahlen auf und ist bspw. zur gleichzeitigen Messung von zwei Fluoreszenzfarbstoffen ausgebildet.

Das Fluoreszenzmessgerät weist mindestens eine Monitordiode auf, wobei vorzugsweise jeder Quelle eine Monitordiode zur Überwachung der Lichtleistung zugeordnet ist.

In Ausgestaltung ist das Messgerät derart gestaltet, dass eine Umgebungslichtkompensation vorgenommen werden kann. Dies bedeutet, dass zunächst mit ausgeschalteter Quelle bzw. LED und anschließend mit eingeschalteter Quelle gemessen wird. Durch Vergleich der beiden Ergebnisse kann dann der Fremdlichtanteil bestimmt werden.

Vorzugsweise ist die mindestens eine Quelle mit einer Umkapselung gekapselt, wobei als Umkapselung ein Aluminiumblock dienen kann. Die Umkapselung weist dabei bevorzugt eine als Blende dienende Öffnung auf.

Typischerweise ist die mindestens eine Monitordiode zur Überwachung einer der Quellen vorgesehen und es ist zwischen dieser Quelle und der Monitordiode ein optisches Modul angeordnet.

Ein Strahlengang von der Quelle zu der mindestens einen Monitordiode ist vorteilhafterweise derart gestaltet, dass kein Fremdlicht die Messung beeinflussen kann.

Das Fluoreszenzmessgerät kann zur gleichzeitigen Messung einer Fluoreszenz und einer Reflexion ausgebildet sein.

Bei dem Fluoreszenzmessgerät sind in einem Gehäuse die optischen Module, die Monitordiode, Detektoren und/oder die Quellen vorgesehen.

Bei dem Fluoreszenzmessgerät weist das Gehäuse bspw. einen Hauptkanal für den Hauptstrahlengang sowie mindestens einen von dem Hauptkanal abgezweigten Nebenkanal für einen Nebenstrahlengang auf.

Das Fluoreszenzmessgerät ist vorzugsweise dazu ausgebildet, mindestens einen als Positionierstrahl vorgesehenen elektromagnetischen Strahl bereitzustellen und umfasst in Ausgestaltung als optische Module Filter, Strahlenteiler und/oder Spiegel. Weiterhin können in dem Gehäuse des Messgeräts Lichtfallen vorgesehen sein.

In einer bevorzugten Ausgestaltung weist das Messgerät eine Einrichtung zur Stabilisierung einer Leistung eines von der mindestens einen Quelle erzeugten elektromagnetischen Strahls auf.

Diese Einrichtung ist typischerweise der Monitordiode zugeordnet, die dazu ausgebildet ist, eine Strahlungsleistung der mindestens einen Quelle kontinuierlich zu messen.

Die Einrichtung ist vorzugsweise dazu ausgebildet, eine Abweichung der Strahlungsleistung von einem Sollwert in Echtzeit zu beheben.

Bei dem Fluoreszenzmessgerät ist vorzugsweise die Einrichtung zur Messung der Strahlungsleistung eines von der mindestens einen Quelle emittierten und an einem ersten Ort auftreffenden elektromagnetischen Strahls vorgesehen, wobei der elektromagnetische Strahl zwischen der mindestens einen Quelle ein erstes optisches Modul, bspw. einen Bandpassfilter, mit mindestens einer optischen Eigenschaft passiert, und wobei ein Teil des zu messenden elektromagnetischen Strahls zwischen der mindestens einen Quelle und der Monitordiode ein zweites optisches Modul, bspw. einen Bandpassfilter, passiert, das im wesentlichen dieselbe mindestens eine optische Eigenschaft wie das erste optische Modul aufweist.

Ein erfindungsgemäßer Adapter mit einem erfindungsgemäßen Fluoreszenzmessgerät ist derart ausgebildet, dass mit diesem Messungen sowohl an Mikroskopslides oder ähnlichen Proben oder Probenhaltern, die nicht transparent sein können, als auch an Küvetten aufgrund der vorliegenden Abstandstoleranz durchgeführt werden können.

Ein erfindungsgemäßes Verfahren dient zur Untersuchung einer Probe mit einem Fluoreszenzmessgerät, insbesondere mit einem erfindungsgemäßen Fluoreszenzmessgerät, das einen Hauptstrahlengang und mindestens ein optisches Modul aufweist, bei dem die Probe mit mindestens einem von dem Fluoreszenzmessgerät bereitgestellten elektromagnetischen Strahl angeregt wird und mindestens ein von der Probe emittierter elektromagnetischer Strahl von dem Fluoreszenzmessgerät empfangen wird, wobei mindestens zwei dieser elektromagnetischen Strahlen zumindest abschnittsweise in einer Ebene entlang dem Hauptstrahlengang geführt werden.

Bei dem Verfahren werden bspw. mittels des Fluoreszenzmessgeräts mindestens ein als Positionierstrahl vorgesehener elektromagnetischer Strahl und mindestens ein als Messstrahl vorgesehener elektromagnetischer Strahl bereitgestellt.

Mit dem Verfahren kann eine Oberfläche eines Bauteils, eine Probe in einem Teststreifen oder ein Auge untersucht werden. Messungen in dünnen Schichten sind ebenfalls möglich.

Bei einer Untersuchung am Auge kann eine Beleuchtungsquelle des Fluoreszenzmessgerät eine Hintergrundbeleuchtung für die Markierung bereitstellen, wobei durch Hintergrundbeleuchtung die Pupille des Auges bei der Untersuchung verkleinert wird, so dass eine Positionierung vereinfacht wird.

Bei dem Verfahren wird vorzugsweise eine Strahlungsleistung eines von mindestens einer Quelle erzeugten elektromagnetischen Strahls mit einer Einrichtung stabilisiert.

Es wird bspw. mit einer Monitordiode der Einrichtung die Strahlungsleistung der mindestens einen Quelle kontinuierlich gemessen.

So kann die Strahlungsleistung eines von der Quelle ausgehenden und an einem ersten Ort auftreffenden elektromagnetischen Strahls gemessen werden, wobei der elektromagnetische Strahl entlang einem ersten Strahlengang ein erstes optisches Modul mit mindestens einer optischen Eigenschaft, bspw. einen Bandpassfilter, passiert, und bei dem ein Teil des zu messenden elektromagnetischen Strahls entlang einem von dem ersten Strahlengang abgezweigten, zweiten Strahlengang, an dem die Montier- bzw. Fotodiode angeordnet ist, geführt wird, wobei der zweite Strahlengang ein zweites optisches Modul, das dieselbe optische Eigenschaft wie das erste optische Modul aufweist, bspw. einen Bandpassfilter, aufweist.

Weiterhin kann bei dem Verfahren eine Umgebungslichtkompensation durch Vergleichsmessung mit ein- und ausgeschalteter Quelle bzw. LED durchgeführt werden.

Das Fluoreszenzmessgerät ist vorzugsweise dazu ausgebildet, mit dem mindestens einen zur Anregung der Probe vorgesehenen elektromagnetischen Strahl in der Probe eine Fluoreszenz anzuregen, so dass die Probe mindestens einen fluoreszierenden elektromagnetischen Strahl eines Wellenlängenbereichs emittiert. Außerdem kann durch den mindestens einen elektromagnetischen Strahl in der Probe eine Reflexion angeregt werden, so dass die Probe mindestens einen reflektierenden elektromagnetischen Strahl eines Wellenlängenbereichs emittiert. Durch den emittierten elektromagnetischen Strahl wird Material der Probe angeregt, aufgrund einer derartigen Wechselwirkung werden in der Probe entstehende elektromagnetische Strahlen emittiert.

In weiterer Ausgestaltung ist das Fluoreszenzmessgerät zur parallelen Messung von mindestens zwei der von der Probe emittierten elektromagnetischen Strahlen geeignet. Diese mindestens zwei elektromagnetischen Strahlen werden empfangen und in dem Fluoreszenzmessgerät getrennt untersucht. Hierzu werden die elektromagnetischen Strahlen spektral getrennt und durch Sensoren oder Detektoren, die für bestimmte spektrale Bereiche elektromagnetische Strahlen empfindlich sind, unabhängig voneinander erfasst. Bei derartigen Sensoren oder Detektoren handelt es sich bspw. um Photodioden.

Unabhängig davon, ob der mindestens eine von der Probe emittierte elektromagnetische Strahl durch Fluoreszenz oder Reflexion entsteht, kann dieser durch das Fluoreszenzmessgerät nachgewiesen werden. Demnach ist das Fluoreszenzmessgerät auch zur parallelen Messung von Fluoreszenz und Reflexion der Probe geeignet.

In einer bevorzugten Ausführungsform ist das Fluoreszenzmessgerät zur Untersuchung einer Probe mit mindestes zwei elektromagnetischen Strahlen ausgebildet. Optische Module oder Elemente des Fluoreszenzmessgeräts sind dabei derart ausgebildet und angeordnet, dass gleichzeitig mindestens ein elektromagnetischer Strahl mit mindestens einem Frequenzbereich ausgesandt wird. Bei Auftreffen dieses mindestens einen elektromagnetischen Strahls auf die Probe kommt es durch Anregung von Material im atomaren und/oder molekularen Bereich zu einer Wechselwirkung, so dass der mindestens eine elektromagnetische Strahl innerhalb mindestens eines Frequenzbereichs von der Probe emittiert wird. Dieser mindestens eine elektromagnetische Strahl wird von dem Fluoreszenzmessgerät empfangen und untersucht. Mit dem Fluoreszenzmessgerät können Anregungsleistungsänderungen hervorgerufen durch spektralen Drift der Lichtquelle ausgeglichen werden, da identische Bedingungen beim Monitor- und Anregungsstrahlgang vorliegen.

Optische Module des Fluoreszenzmessgeräts können derart ausgebildet und angeordnet sein, dass Strahlengänge eines zur Anregung der Probe vorgesehene elektromagnetischen Strahls und eines von der Probe emittierten elektromagnetischen Strahls zumindest abschnittsweise in einer Ebene liegen und somit entlang einem Hauptstrahlengang des demnach konfokalen Fluoreszenzmessgeräts verlaufen. Hierbei können die einzelnen elektromagnetischen Strahlen in dem Strahlengang koaxial zueinander verlaufen.

Zur Realisierung der Untersuchung bzw. Messung der Probe ist das Fluoreszenzmessgerät bspw. derart ausgebildet, dass es mindestens einen als Positionierstrahl vorgesehenen elektromagnetischen Strahl und mindestens einen als Messstrahl vorgesehenen elektromagnetischen Strahl bereitstellt. Diese können sich in einem Optikgehäuse befinden und einen gemeinsamen Hauptstrahlengang besitzen. Mit dem Positionierstrahl ist es möglich, das Fluoreszenzmessgerät zur Berücksichtigung eines geeigneten Abstands und/oder Winkels zu der Probe zu positionieren. Demnach ist das Fluoreszenzmessgerät bspw. auch für Abstandsmessungen geeignet. Eine Nutzung des Positionierstrahls zur Ausrichtung oder Positionierung des Fluoreszenzmessgeräts und/oder des Messstrahls ist sowohl bei Oberflächen als auch bei zumindest teilweise transparenten, räumlich ausgedehnten Proben von Vorteil, so dass der Messstrahl exakt auf eine gewünschte zu untersuchende Stelle der Probe fokussiert werden kann. Zur Positionierung mittels des Positionierstrahls ist keine Blende oder Lochblende vor dem Sensor bzw. der Photodiode erforderlich.

Durch die unterschiedlichen Weglängen der Strahlengänge des Messstrahls und des Positionierstrahls ergibt sich eine unterschiedliche Tiefenschärfe und bedingt durch die Positionierung des Detektors für den Positionierstrahl hinter dem Detektor für den Messstrahl, wodurch sich eine größere Weglänge des Positionierstrahl ergibt, ergeben sich bei ungenauer Positionierung größere Signaländerungen im Positionierstrahl gegenüber dem Messstrahl. Somit kann über den Positionierstrahl eine gute Positionierung vorgenommen werden, da bei Abweichung von der idealen Position diese Abweichung im Positionierstrahl eine größere Änderung als im Messstrahl bewirkt.

Das Fluoreszenzmessgerät weist vorzugsweise eine konfokale Optik und mindestens einen von dem Hauptstrahlengang abgezweigten Nebenstrahlengang auf, wobei in mindestens einem dieser Strahlengänge, dem Hauptstrahlengang und/oder mindestens einem davon abgezweigten Nebenstrahlengang, das mindestens eine zur Beeinflussung eines elektromagnetischen Strahls ausgebildete optische Modul angeordnet ist. Somit ist es möglich, von dem Fluoreszenzmessgerät erzeugte oder bereitgestellte elektromagnetische Strahlen, die zur Untersuchung der Probe vorgesehen sind, zu manipulieren. Ebenfalls können mit dem Fluoreszenzmessgerät von der Probe emittierte elektromagnetische Strahlen durch das mindestens eine optische Modul innerhalb der Strahlengänge moduliert werden.

Das mindestens eine optische Modul kann dazu ausgebildet sein, einen spektralen Bereich eines auf dieses optische Modul auftreffenden elektromagnetischen Strahls zu filtern. Das mindestens eine optische Modul kann auch dazu ausgebildet sein, eine Richtung eines spektralen Bereichs eines auf dieses optische Modul auftreffenden elektromagnetischen Strahls zu verändern. Das mindestens eine optische Modul ist demnach für bestimmte Wellenlängen elektromagnetischer Strahlung durchlässig und für bestimmte Wellenlängen elektromagnetischer Strahlung undurchlässig. Des weiteren kann das mindestens eine optische Modul derart ausgebildet sein, dass ein erster bestimmter Frequenzbereich oder eine erste bestimmte Wellenlänge der elektromagnetischen Strahlung unter einem bestimmten Winkel reflektiert wird. Ein zweiter Frequenzbereich oder eine zweite Wellenlänge der elektromagnetischen Strahlung wird von dem mindestens einen optischen Modul ggf. unter einem zweiten Winkel reflektiert oder gar nicht reflektiert.

Das mindestens eine optische Modul des Fluoreszenzmessgeräts kann innerhalb mindestens eines der Strahlengänge derart angeordnet sein, dass durch dieses eine Richtung eines spektralen Bereichs des elektromagnetischen Strahls in einem Winkel von bspw. 90° umgelenkt wird. Ist bspw. vorgesehen, dass von dem Fluoreszenzmessgerät zwei elektromagnetische Strahlen unterschiedlicher Wellenlänge erzeugt werden, so können diese durch das mindestens eine optische Modul in einem gemeinsamen Strahlengang vereint werden, so dass sie die Probe gleichzeitig erreichen. Es ist ebenso möglich, elektromagnetische Strahlen, die unterschiedliche Wellenbereiche aufweisen und innerhalb eines Strahlengangs verlaufen, durch eine Anzahl optischer Module, die an unterschiedlichen Stellen innerhalb des Strahlengangs angeordnet sind, zu trennen bzw. spektral zu filtern, so dass unterschiedliche Wellenlängenbereiche der elektromagnetischen Strahlen an verschiedenen Stellen separat untersucht werden können.

Das Fluoreszenzmessgerät ist vorzugsweise dazu ausgebildet, die Probe gleichzeitig mit mindestens zwei elektromagnetische Strahlen zu beaufschlagen. Diese beiden elektromagnetischen Strahlen können unterschiedliche Frequenzen bzw. Wellenlängen aufweisen und somit die Probe energetisch und/oder spektral unterschiedlich anregen. Ebenso kann das Fluoreszenzmessgerät dazu ausgebildet sein, von der Probe gleichzeitig elektromagnetische Strahlen mit mindestens zwei Spektralbereichen oder Wellenlängen zu empfangen und diese mindestens zwei spektralen Bereiche oder Wellenlängen der elektromagnetischen Strahlen getrennt zu analysieren. Die zu untersuchende Probe kann aus mehreren Substanzen und Materialien bestehen, die auf elektromagnetische Strahlen unterschiedlicher Wellenlänge verschieden reagieren können. Da im vorliegenden Fluoreszenzmessgerät mehrere elektromagnetische Strahlen gleichzeitig untersucht werden können, können gleichzeitig mehrere qualitative oder können gleichzeitig mehrere qualitative oder quantitative Eigenschaften der Probe erfasst werden. Die durch das Fluoreszenzmessgerät zur Anregung der Probe bereitzustellenden elektromagnetischen Strahlen ebenso wie die von der Probe emittierten und von dem Fluoreszenzmessgerät nachzuweisenden elektromagnetischen Strahlen liegen weitgehend im sichtbaren Bereich oder im ultravioletten Bereich.

In einer möglichen Ausgestaltung der Erfindung ist vorgesehen, dass mindestens ein optisches Modul als dichroitischer Spiegel ausgebildet ist. Derartige dichroitische Spiegel weisen eine Anzahl von Schichten aus bspw. dielektrischen Materialien mit unterschiedlichen Brechungsindizes auf. Die dichroitischen Spiegel sind dazu ausgebildet, entsprechend einer Anzahl und Zusammensetzung der Schichten einen elektromagnetischen Strahl oder einen Lichtstrahl mit unterschiedlichen Frequenzbereichen spektral aufzuteilen. Dabei wird eine erste Wellenlänge des elektromagnetischen Strahls von dem dichroitischen Spiegel reflektiert, wohingegen dieser dichroitische Spiegel für elektromagnetische Strahlen einer anderer Wellenlänge durchlässig ist. Die einzelnen Schichten des dichroitischen Spiegels können bei dessen Herstellung bspw. durch Ionenplattieren aufgebracht werden. Somit sind die einzelnen Schichten scharf voneinander getrennt, der dichroitische Spiegel weist somit eine steile Filterkante auf. Um eine gewünschte räumliche Aufteilung zur Untersuchung eines elektromagnetischen Strahls zu realisieren, können mehrere derartige dichroitische Spiegel innerhalb eines Strahlengangs hintereinander angeordnet werden, so dass ein Frequenzbereich des elektromagnetischen Strahls zunächst einen dichroitischen Spiegel durchläuft und erst von einem danach angeordneten dichroitischen Spiegel reflektiert und bspw. zu einer Untersuchung in Richtung eines anderen Strahlenganges abgezweigt bzw. ausgekoppelt wird.

Zur Bereitstellung des mindestens einen Strahls zur Untersuchung der Probe weist das Fluoreszenzmessgerät typischerweise mindestens eine elektromagnetische Quelle oder Lichtquelle auf, die bspw. als LED (light emitting diode: Leuchtdiode) oder Laser ausgebildet sein kann.

Ein elektromagnetischer Strahl, der eine bestimmte Wellenlänge aufweisen kann, wird von der elektromagnetischen Quelle emittiert, so dass dieser elektromagnetischer Strahl einen der Nebenstrahlengänge durchläuft. Aus diesem einen Nebenstrahlengang wird der elektromagnetische Strahl ggf. unter spektraler Zerlegung von einem der dichroitischen Spiegel in den Hauptstrahlengang eingekoppelt. Das Fluoreszenzmessgerät ist derart relativ zu der zu untersuchenden Probe angeordnet bzw. anzuordnen, dass der Hauptstrahlengang die Probe oder einen gewünschten zu untersuchenden Bereich der Probe kreuzt. Dabei kann eine Ausrichtung des Fluoreszenzmessgeräts relativ zu der Probe mittels des Positionierstrahls erfolgen. Der Positionierstrahl kann auch dazu genutzt werden, einen zur eigentlichen Untersuchung und somit Anregung der Probe vorgesehenen Messstrahl in geeigneter Weise auf die Probe bzw. den Bereich der Probe einzustellen oder zu fokussieren. Es ist ebenfalls bei einem Fluoreszenzmessgerät mit zwei Quellen eine dieser Quellen zur Erzeugung des Positionierstrahls und die andere Quelle zur Erzeugung des eigentlichen Messstrahls zu verwenden. Ist bspw. bei einer Probe ein Referenzfarbstoff aufgebracht oder eingemischt kann mittels des Positionierstrahls die optimale Position für die eigentliche Messung vorgenommen werden.

Als die mindestens eine elektromagnetische Quelle für das Fluoreszenzmessgerät sind insbesondere LEDs mit Die mit lambertscher Abstrahlcharakteristik geeignet. Bei dem Die handelt es sich um ein Plättchen aus Halbleitersubstrat. Des weiteren ist ein Frequenzspektrum des von der LED bzw. dem Die abgestrahlten elektromagnetischen Strahls zu beachten. Eine LED kann derart gewählt werden, dass diese nur elektromagnetische Strahlung oder Licht einer bestimmten Frequenz, bspw. im ultravioletten Bereich, emittiert bzw. abstrahlt. Falls die LED elektromagnetische Strahlung eines breiten Frequenzbereichs abstrahlt, so ist es möglich, einen gewünschten Frequenzbereich durch das mindestens eine optische Modul herauszufiltern. Somit kann das Material der Probe mit einer geeigneten Frequenz des elektromagnetischen Strahls angeregt werden.

Des weiteren kann das mindestens eine optische Modul als Interferenzbandpass zur spektralen Zerlegung oder Filterung des mindestens einen elektromagnetischen Strahls ausgebildet sein. Ein derartiger Interferenzbandpass ist für erste Wellenlängenbereiche des mindestens einen elektromagnetischen Strahls durchlässig und für zweite Wellenlängenbereiche dieses elektromagnetischen Strahls nicht durchlässig. Mit dem Interferenzbandpass ist es möglich, aus einem breiten Frequenzspektrum eines elektromagnetischen Strahls einen bestimmten Frequenzbereich zur Anregung der Probe bereitzustellen. Ebenso kann mit dem Interferenzbandpass aus einem elektromagnetischen Strahl ein zur Untersuchung oder Analyse vorgesehener Spektralbereich herausgefiltert werden.

Ein von der Probe emittierter und somit von dem Fluoreszenzmessgerät empfangener elektromagnetischer Strahl wird in bevorzugter Ausgestaltung innerhalb des Hauptstrahlengangs spektral aufgespalten, so dass bestimmte spektrale Bereiche dieses elektromagnetischen Strahls durch dichroitische Spiegel in Nebenstrahlengänge abgezweigt werden. In diesen Nebenstrahlengängen sind Sensoren bzw. Detektoren angeordnet, die sowohl zu einer qualitativen als auch quantitativen optischen Untersuchung des empfangenen elektromagnetischen Strahls innerhalb bestimmter spektraler Bereiche ausgebildet sind. Dabei kann es sich bei den Sensoren um Ein-, Zwei- oder Mehrkanalsensoren handeln. Die Sensoren sind bspw. als Photodioden ausgebildet.

Zur Filterung bzw. Zerlegung eines elektromagnetischen Strahls kann das Fluoreszenzmessgerät auch eine aus mehreren optischen Modulen, wie dichroitische Spiegel, Interferenzbandpässen, Linsen, Blenden, Filtern und dergleichen, ausgebildete Hochpassstaffel aufweisen. Tiefpassfilter können in den Nebenstrahlengängen vorgesehen sein.

Die mindestens eine elektromagnetische Quelle oder Lichtquelle des Fluoreszenzmessgeräts kann einen elektromagnetischen Strahl mit einer zeitlich begrenzten Länge in einer Größenordnung von einigen ms bis einigen 100 ms erzeugen. Somit sind kurzzeitige Untersuchungen der Probe möglich. Falls die Probe aus empfindlichem, bspw. organischem Material, besteht, wird eine chemische Zusammensetzung dieses Materials durch die nur kurze Einwirkung des elektromagnetischen Strahls unwesentlich beeinflusst. Die Probe wird während der Untersuchung insgesamt schonend behandelt.

Das Fluoreszenzmessgerät weist in einer möglichen Ausgestaltung ein Gehäuse auf, in dem eine Anzahl optischer Module modular anzuordnen ist oder in dem eine Anzahl optischer Module modular angeordnet ist. Somit ist es möglich, das Fluoreszenzmessgerät für bestimmte Untersuchungen bestimmter Proben bestimmter materieller. Eigenschaften oder Zusammensetzungen gezielt zusammenzubauen bzw. mit optischen Modulen zu bestücken, so dass die Proben individuell mit elektromagnetischen Strahlen bestimmter Wellenlängen zu beaufschlagen sind. Gleichzeitig ist mindestens ein von den Proben emittierter elektromagnetischer Strahl mit einer zu erwartender Wellenlänge zu untersuchen.

Das Gehäuse des Fluoreszenzmessgeräts kann einen Hauptkanal für elektromagnetische Strahlen, die innerhalb des Hauptstrahlengangs verlaufen, sowie mindestens einen von diesem Hauptkanal abgezweigten Nebenkanal, in dem elektromagnetische Strahlen eines Nebenstrahlengangs verlaufen, aufweisen. Diese genannten Kanäle, also der Hauptkanal sowie der mindestens eine Nebenkanal, sind bspw. innenwandig mit Kerben oder Nuten versehen, in die die optischen Module in einfacher Weise auch modular einzusetzen und bedarfsweise wieder zu entnehmen sind.

Dabei können die dichroitischen Spiegel an Verzweigungen bzw. Schnittpunkten des Hauptkanals und des mindestens einen davon abgezweigten Nebenkanals angeordnet sein. Der Hauptkanal und der mindestens eine Nebenkanal können sich bspw. unter einem Winkel von 90° kreuzen, so dass der Hauptstrahlengang innerhalb des Hauptkanals in mindestens einen Nebenstrahlengang des Nebenkanals ebenfalls unter einem Winkel von bspw. 90° kreuzt. Hierzu ist vorgesehen, dichroitische Spiegel innerhalb des Gehäuses derart anzuordnen, dass diese sowohl relativ zu dem Hauptkanal und somit dem Hauptstrahlengang sowie relativ zu dem Nebenkanal und entsprechend dem Nebenstrahlengang unter einem Winkel von 45° geneigt bzw. schräg angeordnet sind. Somit kann ein innerhalb des Nebenkanals verlaufender elektromagnetischer Strahl durch den dichroitischen Spiegel unter einem Winkel von 90° umgelenkt und somit in den Hauptkanal in Richtung des Hauptstrahlengangs eingekoppelt werden. Entsprechend ist ein im Hauptkanal verlaufender elektromagnetischer Strahl durch den dichroitischen Spiegel aus dem Hauptkanal und somit im Hauptstrahlengang und dem Nebenkanal und somit in den Nebenstrahlengang einzukoppeln.

In einer möglichen Ausführungsform ist vorgesehen, dass ein Gehäuse des Fluoreszenzmessgeräts, das zur modularen Aufnahme optischer Komponenten vorgesehen ist, aus einem Kunststoffspritzgussteil hergestellt ist. Alternativ ist das Gehäuse des Fluoreszenzsensors durch Silikonabguss aus einem durch ein CNC-Fräsen hergestellten Rohling zu fertigen. Auch ein Spritzgussverfahren ist anwendbar.

Das Fluoreszenzmessgerät kann zur Untersuchung eines Auges eines Patienten vorgesehen bzw, ausgebildet sein. Mit diesem Fluoreszenzmessgerät wird ein Bereich auf oder innerhalb des Auges bzw. Augapfels optisch untersucht. Dabei ist das Fluoreszenzmessgerät und damit der Messstrahl zur eigentlichen Untersuchung unter Anregung des Bereichs des Auges mit dem Positionierstrahl auszurichten, so dass der Messstrahl genau in den gewünschten Bereich des Auges fokussiert wird. Aus diesem Bereich emittierte elektromagnetische Strahlung ist mit dem Fluoreszenzmessgerät zu erfassen und auch unter Berücksichtigung bestimmter Wellenlängenbereiche zu untersuchen.

Das Fluoreszenzmessgerät kann derart ausgebildet sein, dass mindestens ein elektromagnetischer Strahl mit einer zu detektierenden Fluoreszenzwellenlänge und mindestens ein elektromagnetischer Strahl mit einer Anregungswelle durch konfokale Ausbildung mindestens eines der Strahlengänge für den mindestens einen als Messstrahl vorgesehenen elektromagnetischen Strahl auf oder innerhalb der Probe denselben Fokuspunkt aufweisen. Eine geeignete Führung mindestens eines elektromagnetischen Strahls, unabhängig davon, ob dieser von dem Fluoreszenzmessgerät erzeugt oder von der Probe emittiert wird, ist durch geeignete Anordnung der optischen Module innerhalb des mindestens einen Strahlengangs gewährleistet.

In Ausgestaltung ist vorgesehen, dass die mindestens eine zu detektierende Fluoreszenzwellenlänge eines von dem Auge, bspw. auf oder innerhalb der zu untersuchenden Kornea des Auges, emittierten elektromagnetischen Strahls und die mindestens eine Anregungswellenlänge des elektromagnetischen Strahls zur Anregung des Auges auf der Kornea des Auges denselben Fokuspunkt aufweisen. Selbstverständlich ist es denkbar, das Fluoreszenzmessgerät derart einzustellen, dass auch andere Bereiche des Auges untersucht werden können. Bei einer geeigneten Wahl einer Anregungswellenlänge für den mindestens einen elektromagnetischen Strahl ist zu beachten, welches Material innerhalb der Probe anzuregen ist, so dass für die Untersuchung elektromagnetische Strahlen mit geeigneten physikalischen Parameter, wie Wellenlänge, Intensität und dergleichen, emittiert werden. Des weiteren ist bei der Ausbildung des Fluoreszenzmessgeräts zu beachten, wie sich der anregende elektromagnetische Strahl und der emittierte elektromagnetische Strahl auf dem Weg zu dem zu untersuchenden Bereich der Probe und wieder zurück zu dem Fluoreszenzmessgerät verhält, so dass ein geeigneter Fokuspunkt bereitgestellt wird. Dieser Fokuspunkt ist für den Messstrahl über Positionierung durch den Positionierstrahl auszumessen.

Das Fluoreszenzmessgerät ist bspw. dazu ausgebildet, elektromagnetische Strahlen mit unterschiedlichen Wellenlänge, bspw. von 260nm bis 900nm, bereitzustellen. Das Messgerät kann sowohl im UV-Bereich als auch im NIR- oder VIS-Bereich Anwendung finden. Es können auch UV-LEDs eingesetzt werden. Eine geeignete Wellenlänge hängt von der materiellen Zusammensetzung und/oder der gewünschten zu messenden Fluoreszenzeffekte der Probe ab. Die elektromagnetischen Strahlen, bspw. im ultravioletten Bereich, mit einer gewünschten Wellenlänge werden durch geeignete Wahl der elektromagnetischen Quelle und/oder geeignete Wahl der optischen Module, wie Interferenzbandpässen und/oder dichroitischen Spiegel, gezielt realisiert.

In weiterer Ausgestaltung kann das Fluoreszenzmessgerät eine als Kreuz ausgebildete Markierung bzw. einen entsprechenden Orientierungspunkt aufweisen, die bzw. der dazu vorgesehen ist, dass sich das Auge bei einer Untersuchung auf diese Markierung konzentriert. Zusätzlich kann das Fluoreszenzmessgerät eine Beleuchtungsquelle zur Bereitstellung einer Hintergrundbeleuchtung der Markierung und gleichzeitig zur Verkleinerung der Pupille des Auges während der Untersuchung aufweisen. Zur Durchführung der Untersuchung ist demnach vorgesehen, dass der Patient mit seinem Auge die Markierung betrachtet. Die eigentliche Unersuchung, bei der der Messstrahl zunächst über den Positionierstrahl einzustellen und die Messung mit dem Messstrahl zur Anregung eines Bereichs des Auges bereitzustellen ist, ist in kurzer Zeit durchführbar. Dabei wird das Auge durch diese elektromagnetischen Strahlen, also durch den Positionierstrahl sowie den Messstrahl, nur in einer Größenordnung von wenigen Millisekunden oder wenigen zehn Millisekunden beaufschlagt, so dass eine Reizung oder Schädigung des Auges ausgeschlossen werden kann. Die Lichtleistung ist derart gering, dass eine Schädigung nicht auftritt.

Das Fluoreszenzmessgerät kann eine Einrichtung zur Stabilisierung einer Strahlungsleistung eines von der mindestens einen elektromagnetischen Quelle erzeugten elektromagnetischen Strahls aufweisen. Hierzu kann diese Einrichtung mit einer Monitor- oder Photodiode ausgestattet sein, mit der die Strahlungsleistung der mindestens einen elektromagnetischen Quelle kontinuierlich gemessen wird. Des weiteren kann mit dieser Einrichtung auch eine Wellenlänge oder ein Wellenlängenbereich der von der elektromagnetischen Quelle emittierten elektromagnetischen Strahlung gemessen werden. Eine mögliche Abweichung der Strahlungsleistung von einem Sollwert kann durch geeignete Regelung in Wechselwirkung zwischen der Einrichtung und der elektromagnetischen Quelle in Echtzeit behoben werden.

In diesem Fall ist die Einrichtung für das Fluoreszenzmessgerät zur Messung der Strahlungsleistung eines von der mindestens einen Quelle emittierten und an einem ersten Ort der Probe auftreffenden elektromagnetischen Strahls vorgesehen, wobei der elektromagnetische Strahl zwischen der mindestens einen elektromagnetischen Quelle ein erstes optisches Modul, bspw. ein Bandpassfilter, mit mindestens einer optischen Eigenschaft passiert, wobei ein Teil des zu messenden elektromagnetischen Strahls zwischen der elektromagnetischen Quelle und der Monitordiode ein zweites optisches Modul, bspw. ein Bandpassfilter, passiert. Dabei ist vorgesehen, dass das erste und das zweite optische Modul dieselben optischen Eigenschaften aufweisen. Damit wird erreicht, dass der zur eigentlichen Untersuchung der Probe vorgesehene elektromagnetische Strahl sowie der von diesem elektromagnetischen Strahl abgezweigte Bereich, der von der Einrichtung untersucht wird, im wesentlichen denselben physikalischen Weg durchlaufen und die zu untersuchende Probe gleichartig modifiziert oder nicht modifiziert erreichen, so dass mit der Monitordiode eine über der Zeit konstante Licht- bzw. Strahlungsleistung gewährleistet werden kann.

Die erfindungsgemäße Vorrichtung zur Untersuchung einer Probe ist mit mindestens einem Fluoreszenzmessgerät ausgestattet. Dabei weist die Vorrichtung typischerweise einen Probenhalter auf, der sowohl zur Aufnahme der zu untersuchenden Probe als auch zur Aufnahme des mindestens einen Fluoreszenzmessgeräts ausgebildet ist.

Bei bekannten Vorrichtungen zur Untersuchung von Proben ist vorgesehen, dass sich ein Probenhalter innerhalb eines Messgeräts befindet. Bei der erfindungsgemäßen Vorrichtung hingegen befindet sich das Fluoreszenzmessgerät, also eine Einrichtung zur optischen Untersuchung, innerhalb des Probenhalters der Vorrichtung. Dabei ist der Probenhalter vorzugsweise derart ausgebildet, dass unterschiedliche Fluoreszenzmessgeräte in diesen einsetzbar sind und aus diesen auch wieder entnommen werden könne, so dass aufgrund dieser Austauschbarkeit unterschiedliche Proben unter verschiedenen Bedingungen, also unter Bereitstellung unterschiedlicher elektromagnetischer Strahlen verschiedener Wellenlängen oder Intensitäten, untersucht werden können.

In weiterer Ausgestaltung ist die Vorrichtung mit einem Handsteuergerät ausgestattet, das zum Auslesen der Daten von dem Fluoreszenzmessgerät ausgebildet ist. Die Vorrichtung und das Handsteuergerät können mit einer Schnittstelle ausgestattet sein, über die eine Übertragung von Daten zu einer externen Recheneinheit möglich ist. Somit ist eine Untersuchung der Probe, was eine Steuerung des Fluoreszenzmessgeräts sowie eine Auswertung der von der Probe emittierten elektromagnetischen Strahlen umfasst, sowohl mit dem Handsteuergerät, das hierzu ein geeignetes Display und eine geeignete Tastatur aufweisen kann, als auch mit der Recheinheit, die mit der Vorrichtung verbunden ist, möglich. Auf diese Weise ist eine automatische, rechnergestützte Untersuchung der Probe und somit eine Fluoreszenzmessung möglich. Es ist auch denkbar, dass die Vorrichtung bspw. innerhalb des Handsteuergeräts ebenfalls eine Recheneinheit bzw. einen Computer zur Steuerung und Auswertung aufweist. Bei der Auswertung können bei der Untersuchung erfasste elektromagnetische Strahlen, bspw. Reflexionsstrahlen, eliminiert werden.

Die Vorrichtung bzw. der Probenhalter der Vorrichtung kann derart ausgebildet sein, dass in der Vorrichtung zwei Fluoreszenzmessgeräte aufnehmbar sind, die derart zueinander angeordnet sind, dass deren Hauptstrahlengänge parallel zueinander orientiert sind, so dass diese beiden Hauptstrahlengänge in einem Abstand zur Probe individuell voneinander einstellbar positionierbar sind.

In bevorzugter Ausgestaltung ist mit der Vorrichtung eine rechnergestützte, automatisierte Simulation einer Fluoreszenzmessung durchführbar. Außerdem kann die Vorrichtung einen Schrittmotor aufweisen, durch den eine bewegliche sowie fixierbare Verbindung zwischen dem mindestens einen Fluoreszenzmessgerät und dem Probenhalter und/oder dem Handsteuergerät realisiert wird. Mit diesem Schrittmotor ist es möglich, die Probe und das mindestens eine Fluoreszenzmessgerät in bis zu drei Raumrichtungen x, y und z relativ zueinander zu positionieren.

Eine Vorbereitung einer eigentlichen Messung mittels des Messstrahls kann mit dem Positionierstrahl erfolgen. Sobald mittels des Positionierstrahls eine geeignete Positionierung bzw. Ausrichtung des Fluoreszenzmessgeräts relativ zu der Probe ermittelt ist, kann der Schrittmotor auf Grundlage der derart ermittelten Daten die Probe und das mindestens eine Fluoreszenzmessgerät relativ zueinander ausrichten, so dass die eigentliche Untersuchung der Probe unter bestmöglichen Bedingungen automatisiert und/oder rechnergestützt durchgeführt werden kann. Außerdem ist mit der Vorrichtung eine ebenfalls rechnergestützte motorische Kalibrierung des mindestens einen Fluoreszenzmessgeräts auszuführen.

Das Fluoreszenzmessgerät kann in: vielen Bereichen eingesetzt werden. So ist eine optische Überprüfung von Produktionsprozessen denkbar. Über die Schnittstelle an dem Fluoreszenzmessgerät oder der Vorrichtung ist eine Kommunikation mit technischen Einrichtungen möglich, die anhand von Messungen des Fluoreszenzmessgeräts direkt oder indirekt gesteuert werden können.

Bei dem erfindungsgemäßen Verfahren zur Untersuchung einer Probe mit einem Fluoreszenzmessgerät, das einen Hauptstrahlengang und mindestens ein optisches Modul aufweist, wird die Probe mit mindestens einem von dem Fluoreszenzmessgerät bereitgestellten elektromagnetischen Strahl angeregt und mindestens ein von der Probe emittierter elektromagnetischer Strahl von dem Fluoreszenzmessgerät empfangen. Dabei werden mindestens zwei dieser elektromagnetischen Strahlen zumindest abschnittsweise in einer Ebene entlang dem Hauptstrahlengang geführt. Dieses Verfahren ist in bevorzugter Ausgestaltung mit dem erfindungsgemäßen Fluoreszenzgerät durchführbar.

In bevorzugter Ausgestaltung werden zur Untersuchung der Probe mit dem Fluoreszenzmessgerät mindestens zwei elektromagnetische Strahlen bereitgestellt. Dadurch kann parallel eine Fluoreszenz und eine Reflexion der Probe gemessen werden. Hierbei werden Strahlengänge eines zur Messung der Fluoreszenz vorgesehenen elektromagnetischen Strahls und eines zur Messung der Reflexion vorgesehenen elektromagnetischen Strahls zumindest abschnittsweise in einer Ebene entlang einem Hauptstrahlengang des Fluoreszenzmessgeräts geführt. Bei Durchführung des Verfahrens wird mittels geeigneter optischer Module mindestens ein Wellenlängenbereich aus dem mindestens einen elektromagnetischen Strahl herausgefiltert, so dass zur Untersuchung der Probe ein elektromagnetischer Strahl zur Anregung der Probe mit einem geeigneten Frequenzbereich, bspw. im ultravioletten Bereich, bereitgestellt wird. Ebenfalls wird mit dem mindestens einen optischen Modul aus einem emittierten elektromagnetischen Strahl der Probe ein für die Untersuchung interessanter Wellenlängenbereich für eine Analyse zu einem Sensor oder Detektor geführt.

Bei einer möglichen Durchführung des Verfahrens werden mittels des Fluoreszenzmessgeräts mindestens ein als Positionierstrahl vorgesehener elektromagnetischer Strahl und mindestens ein als Messstrahl vorgesehener elektromagnetischer Strahl bereitgestellt. Mit diesem Positionierstrahl kann das Fluoreszenzmessgerät in einem geeigneten Abstand und unter einem geeigneten Winkel zu der zu untersuchenden Probe positioniert werden. Ebenso kann vorgesehen sein, dass mit dem Positionierstrahl der eigentliche Messstrahl ausgerichtet wird. Dabei können der Positionierstrahl und der Messstrahl für jeweils eine Art vergleichbarer zu untersuchender Proben bezüglich ihrer Wellenlänge derart aufeinander abgestimmt sein, dass die Positionierung in einfacher Weise durchzuführen ist.

Zur Erleichterung der Messung ist denkbar, dass sich ein Patient mit seinem Auge auf eine Markierung oder einen Orientierungspunkt, etwa in Form eines Kreuzes, innerhalb eines Fluoreszenzmessgeräts konzentrieren kann. Dabei wird das Auge in idealer Weise ausgerichtet, so dass die zur Untersuchung vorgesehenen elektromagnetischen Strahlen gewünschte Bereiche auf oder innerhalb des Auges erreichen und dort fokussiert werden. Die Markierung kann mit einer Beleuchtungsquelle des Fluoreszenzmessgerät beleuchtet werden. Somit kann sich das Auge des Patienten besser auf die Markierung konzentrieren. Durch die Beleuchtungsquelle ergibt sich des weiteren, dass eine Pupille des Auges bei der Untersuchung verkleinert wird und die Positionierung dadurch verbessert wird, wodurch ein Ergebnis der Fluoreszenzmessung verbessert wird.

Es ist auch denkbar, dass das Verfahren gleichzeitig mit zwei Fluoreszenzmessgeräten durchgeführt wird, die derart zueinander angeordnet werden, dass deren Hauptstrahlengänge parallel zueinander orientiert sind und voneinander einen Augenabstand einer zu untersuchenden Person aufweisen, so dass bei der Untersuchung beide Augen dieser Person untersucht werden können.

Das Verfahren kann mit einem Computer oder einer entsprechenden Recheneinheit automatisch durchgeführt werden. Dabei ist ebenfalls eine Simulation der Fluoreszenzmessung möglich. Eine rechnergestüzte Durchführung des Verfahrens kann sämtliche Aspekte der Fluoreszenzmessung sowie eine automatisierte Handhabung des Fluoreszenzmessgeräts umfassen. So sind zur Anregung der Probe vorgesehene elektromagnetische Strahlen in einem geeigneten Frequenzbereich mit einer geeigneten Leistung bereitzustellen. Eine Ausrichtung des mindestens einen Fluoreszenzmessgeräts relativ zu der Probe unter der Zuhilfenahme des Positionierstrahls bzw. eine entsprechende Ausrichtung des mindestens einen Messstrahls relativ zu der Probe kann ebenfalls rechnergestützt erfolgen. Ein Probenhalter, in dem das mindestens eine Fluoreszenzmessgerät sowie die Probe aufgenommen sind, ist mit einem Schrittmotor ausgestattet, der bei Durchführung des Verfahrens das Fluoreszenzmessgerät und die Probe in bis zu drei Raumrichtungen unter Bereitstellung eines geeigneten Abstands sowie unter Einstellung eines geeigneten Winkels relativ zueinander positioniert. Außerdem ist das Fluoreszenzmessgerät bei Durchführung des Verfahrens ebenfalls rechnergestützt zu kalibrieren. Auch eine Auswertung von gemessenen Daten ist rechnergestützt durchführbar.

Das erfindungsgemäße Computerprogramm mit Programmcodemitteln ist dazu ausgelegt, alle Schritte des erfindungsgemäßen Verfahrens durchzuführen, wenn das Computerprogramm auf einem Computer oder auf einer entsprechenden Recheneinheit, insbesondere einer Recheneinheit der erfindungsgemäßen Vorrichtung, durchgeführt wird.

Das erfindungsgemäße Computerprogrammprodukt mit Programmcodemitteln, die auf einem computerlesbaren Datenträger gespeichert sind, ist dazu ausgelegt, alle Schritte des erfindungsgemäßen Verfahrens durchzuführen, wenn das Computerprogramm auf einem Computer oder auf einer entsprechenden Recheneinheit, insbesondere einer Recheneinheit der erfindungsgemäßen Vorrichtung, durchgeführt wird.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt eine erste Ausführungsform eines erfindungsgemäßen Fluoreszenzmessgeräts in schematischer Darstellung.
- Figur 2: zeigt eine zweite Ausführungsform des Fluoreszenzmessgeräts in schematischer Darstellung.
- Figur 3: zeigt eine dritte Ausführungsform des Fluoreszenzmessgeräts in schematischer Darstellung.
- Figur 4: zeigt eine vierte Ausführungsform des Fluoreszenzmessgeräts in schematischer Darstellung zur Berücksichtigung eines Positionierstrahls.
- Figur 5: zeigt das in Figur 4 gezeigte Fluoreszenzmessgerät unter Berücksichtigung eines Messstrahls.
- Figur 6a: zeigt ein konfokales System in schematischer Darstellung.
- Figur 6b: zeigt ein nicht-konfokales System in schematischer Darstellung.
- Figur 7: zeigt Details zu einer Positionierung eines Positionierstrahls (Figur 7a) und eines Messstrahls (Figur 7b) zu dem in den Figuren 4 und 5 gezeigten Fluoreszenzmessgerät.
- Figur 8a: zeigt eine fünfte Ausführungsform eines konfokalen Fluoreszenzmessgeräts in schematischer Darstellung.
- Figur 8b: zeigt Details des in Figur 8a dargestellten konfokalen Fluoreszenzmessgeräts.
- Figur 9: zeigt eine sechste Ausführungsform des Fluoreszenzmessgeräts mit einer Einrichtung zur Messung einer Anregungsleistung in schematischer Darstellung.
- Figur 10: zeigt eine siebte Ausführungsform eines Fluoreszenzmessgeräts in schematischer Darstellung.
- Figur 11: zeigt eine achte Ausführungsform des Fluoreszenzmessgeräts in schematischer Darstellung, wobei in den Figuren 1bb, 11c und 11d Strahlengänge einzelner zur Messung vorgesehener elektromagnetischer Strahlen separat dargestellt sind.
- Figur 12: zeigt einen Positionierstrahl (Figur 12a) für das in Figur 11 vorgestellte Fluoreszenzmessgerät sowie eine Anregung (Figur 12b) dieses Positionierstrahls für das in Figur 11 vorgestellte Fluoreszenzmessgerät.
- Figur 13: zeigt eine achte Ausführungsform des Fluoreszenzmessgeräts in schematischer Darstellung.
- Figur 14: zeigt in schematischer Darstellung eine bevorzugte Ausgestaltung einer Vorrichtung.
- Figuren 15: bis 17 zeigt eine weitere Ausführungsform des erfindungsgemäßen Messgeräts in einer Draufsicht.
- Figur 18: zeigt das Messgerät aus Figuren 15 bis 17 in vereinfachter Darstellung.
- Figur 19: zeigt das Messgerät aus Figuren 15 bis 17 in vereinfachter Darstellung.
- Figur 20: zeigt eine mögliche Anwendung des erfindungsgemäßen Messgeräts.
- Figur 21 bis 27: zeigen weitere mögliche Anwendungen.
Die Figuren werden zusammenhängend und übergreifend beschrieben, gleiche Bezugszeichen bezeichnen gleiche Bauteile.

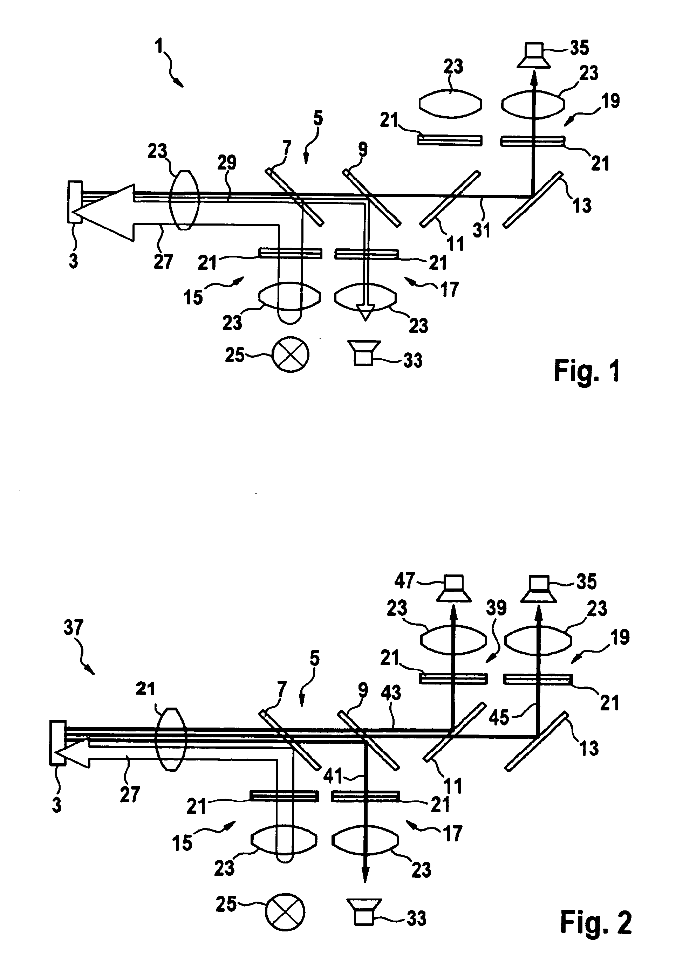

Die Figuren 1 bis 3 zeigen schematische Darstellungen dreier möglicher Ausführungsformen von konfokalen Fluoreszenzmessgeräten 1, 37, 47, wobei jeweils zugehörige Betriebsmöglichkeiten beschrieben werden.

Figur 1 zeigt eine erste Ausführungsform eines Fluoreszenzmessgeräts 1, das dazu ausgebildet ist, einen zur Anregung 27 einer Probe 3 geeigneten elektromagnetischen Strahl zu erzeugen. Eine Detektion mindestens zwei von der Probe 3 emittierter elektromagnetischer Strahlen, in diesem Fall ein erster Fluoreszenzstrahl 29 und ein zweiter Fluoreszenzstrahl 31, ist ebenfalls mit dem Fluoreszenzmessgerät möglich.

Das Fluoreszenzmessgerät 1 weist in einem Hauptstrahlengang 5 als dichroitische Spiegel ausgebildete Strahlteiler 7, 9, 11 und 13 auf. In Nebenstrahlengängen 15, 17 und 19 sind Bandpässe 21 angeordnet. Außerdem sind in dem Hauptstrahlengang 5 sowie in den Nebenstrahlengängen 15, 17, 19 Linsen 23 angeordnet.

In dem von links betrachtet ersten Nebenstrahlengang 15 ist zusätzlich eine elektromagnetische Quelle 25 zur Bereitstellung elektromagnetischer Strahlung angeordnet, von der eine durch einen breiten Pfeil dargestellte Anregung 27 ausgeht.

Der erste Strahlteiler 7 ist dazu vorgesehen, die Anregung 27 aus dem Nebenstrahlengang 15 in den Hauptstrahlengang 5 einzukoppeln, der erste Strahlteiler 7 reflektiert eine Wellenlänge der Anregung 27 nicht vollständig. Dadurch wird von der Probe 3 emittierte elektromagnetische Strahlung jeweils zu einem geringen Anteil von dem erstem Strahlteiler 7 und dem zweiten Strahlteiler 9 und größtenteils von dem vierten Strahlteiler 13 aus dem Hauptstrahlengang 5 ausgekoppelt. Ein Spektralverlauf der Bandpässe 21 sowie der Strahlteiler 7, 9, 11, 13 in dem als Anregungskanal vorgesehenen ersten Nebenstrahlengang 15 und dem als Reflexionskanal vorgesehene zweite Nebenstrahlgang 17 sind identisch. Mit diesen Strahlteilern 7, 9, 11, 13 können Änderungen im spektralen Bereich eines empfangenen elektromagnetischen Strahls berücksichtigt werden.

Eine langwelligere Fluoreszenz 31 transmittiert den ersten und den zweiten Strahlteiler 7, 9 und wird von dem vierten Strahlteiler 13 in den als Fluoreszenzkanal vorgesehenen vierten Nebenstrahlengang 19 ausgekoppelt. Dabei ist der vierte Strahlteiler 13 so ausgelegt, dass Restintensitäten der Anregung 27 transmittieren und nur ein gewünschter Spektralbereich der Fluoreszenz 31 aus dem Hauptstrahlengang 5 ausgekoppelt wird.

Außerdem weist das Fluoreszenzmessgerät 1 zwei Sensoren 33, 35 auf. Dabei ist der erste Sensor 33 in dem als Reflexionskanal vorgesehene zweiten Nebenstrahlengang 32 von links angeordnet und zur Detektion mindestens eines Spektralbereichs von der Probe 3 emittierter oder reflektierter elektromagnetischer Strahlung, in diesem Fall der Reflexion 29, vorgesehen. Der zweite Sensor 35 ist in dem als Fluoreszenzkanal vorgesehenen vierten Nebenstrahlengang 19 angeordnet und zur Detektion mindestens eines spektralen Bereichs der als Fluoreszenz 31 vorgesehenen, von der Probe 3 emittierten elektromagnetischen Strahlung ausgebildet. Figur 2 zeigt eine zweite Ausführungsform eines Fluoreszenzmessgeräts 37, das ähnlich wie das in Figur 1 gezeigte Fluoreszenzmessgerät 1 vier Strahlteiler 7, 9, 11, 13, Bandpässe 21 sowie Linsen 23 innerhalb des Hauptstrahlengangs 5 sowie in diesem Fall vier Nebenstrahlengängen 15, 17, 19, 39 aufweist. Die elektromagnetische Quelle 25 erzeugt die durch den Pfeil dargestellte Anregung 27, die durch den ersten Strahlteiler 7 aus dem ersten Nebenstrahlengang 15 in den Hauptstrahlengang 5 eingekoppelt wird und die Probe 3 erreicht.

Bei einer derartigen Bestückung des Fluoreszenzmessgeräts 37 werden mit der Anregung 27 an oder in der Probe 3 bis zu drei Fluoreszenzen 41, 43, 45 stimuliert und entsprechende Strahlung emittiert. Der erste Strahlteiler 7 koppelt die kurzwellige Anregung 27 in den Hauptstrahlengang 5 ein. Die drei Strahlteiler 9, 11, 13 reflektieren die durch die Sensoren 33, 35, 47 zu detektierenden Spektralbereiche der von der Probe 3 ausgehenden Fluoreszenzen 41, 43, 45 bzw. emittierten elektromagnetischen Strahlen aus dem Hauptstrahlengang 5 in die Nebenstrahlengänge 17, 19, 31, so dass diese die dort angeordneten Sensoren 33, 35, 47 erreichen.

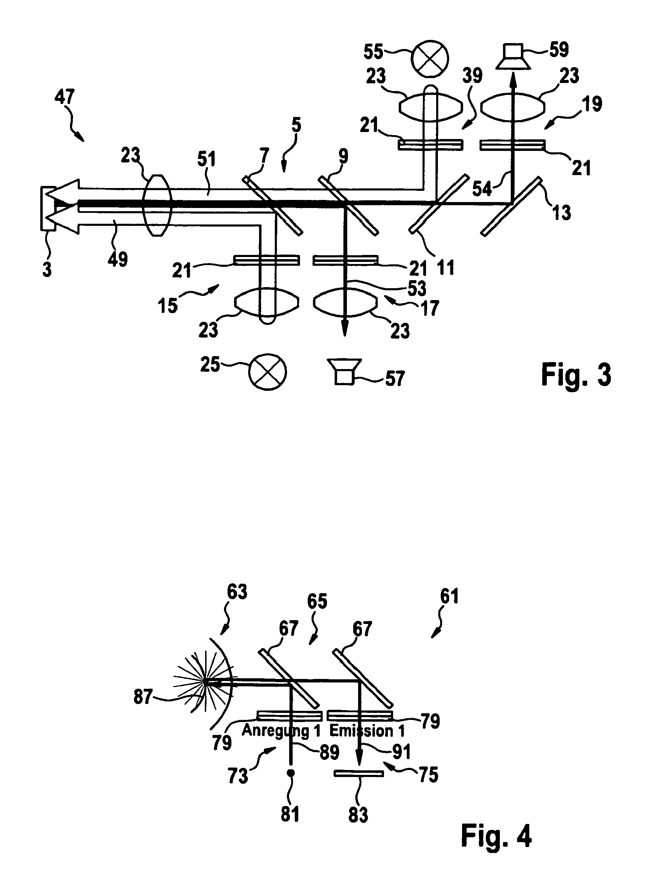

Figur 3 zeigt eine dritte Ausführungsform eines Fluoreszenzmessgeräts 47, mit dem durch zwei elektromagnetische Quellen 25, 55, die in verschiedenen Nebenstrahlengängen 15, 39 angeordnet sind, zwei Anregungen 49, 51 bereitstellbar sind. Mit diesem Fluoreszenzmessgerät ist eine Detektion von bis zu zwei Fluoreszenzen 53, 55 unterschiedlicher Wellenlänge möglich ist.

Bei dieser Bestückung des Fluoreszenzmessgeräts 47 wird die Probe 3 mit zwei Anregungen 49, 51 unterschiedlicher Wellenlänge angeregt bzw. beaufschlagt, so dass durch die Probe 3 bis zu zwei Fluoreszenzen 53, 54 unterschiedlicher Wellenlängen stimuliert werden. Die Anregungen 49, 51 werden durch die elektromagnetischen Quellen 25, 55 erzeugt und von dem ersten und dritten Strahlteiler 7, 11 von links in den Hauptstrahlengang 7 eingekoppelt. Der zweite und vierte Strahlteiler 9, 13 von links reflektieren die zu detektierenden Spektralbereiche der Fluoreszenzen 53, 54 aus dem Hauptstrahlengang 7 in die Nebenstrahlengänge 17, 19, wo eine Detektion durch die Sensoren 57, 59 erfolgt. Im Rahmen einer möglichen Anwendung kann es sich bei einer ersten der beiden Anregungen 49, 51 um einen Positionierstrahl und bei einer zweiten der Anregungen 49, 51 um einen Messstrahl handeln. Hierbei ist vorgesehen, dass der Positionierstrahl zur Positionierung des Messstrahls und/oder des Fluoreszenzmessgeräts 47 dient.

Es sind weitere Bestückungsvarianten von derartigen Fluoreszenzmessgeräten 1, 37, 47 unter Bereitstellung mindestens einer Anregung mit mindestens einer Wellenlänge sowie zum Nachweis mindestens einer Fluoreszenz und/oder Reflexion verschiedener Wellenlängen möglich. Alle drei Fluoreszenzmessgeräte 1, 37, 47 weisen konfokale Strahlengänge für die Anregungen 27, 49, 51 und vor der Probe 3 emittierte elektromagnetische Strahlen, also der Fluoreszenzen bzw. Reflexionen 29, 31, 41, 43, 45, 53, 54, auf. Bei den Quellen 25, 59 handelt es sich üblicherweise um Lichtquellen, die hauptsächlich elektromagnetische Strahlung im sichtbaren Bereich, also Lichtstrahlen erzeugen. Eine Erzeugung im UV- und NIR-Bereich ist ebenfalls möglich.

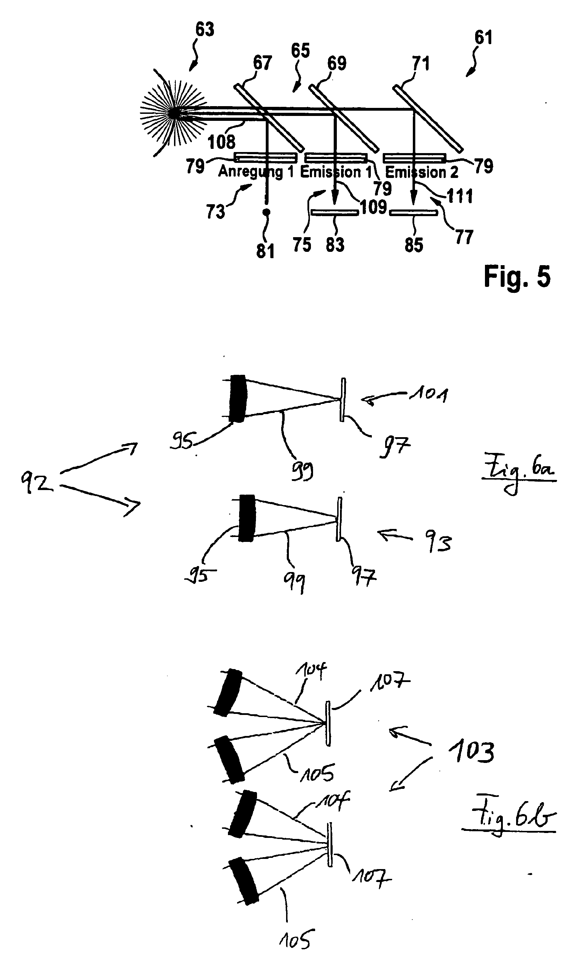

Die Figuren 4 und 5 zeigen eine vierte Ausführungsform eines ebenfalls mit konfokalen Strahlengängen für Anregung sowie Emission (Fluoreszenz bzw. Reflexion) ausgestatteten Fluoreszenzmessgeräts 61 zur Untersuchung eines Auges 63 für Anregung sowie Emission (Fluoreszenz bzw. Reflexion). Es ist dazu geeignet, einen Messstrahl 108 (Figur 5) und einen Positionierstrahl 89 (Figur 4), an die unterschiedliche Anforderungen gestellt werden, bereitzustellen. Das Fluoreszenzmessgerät 61 weist einen Hauptstrahlengang 65 mit darin angeordneten Strahlteilern 67, 69, 71 auf. In Nebenstrahlengängen 73, 75, 77 sind Bandpässe 79 angeordnet. In dem ersten Nebenstrahlengang 73 befindet sich eine Quelle 81, in den beiden weiteren Nebenstrahlengängen 75, 77 sind Sensoren 83, 85 angeordnet. Der dritte Strahlteiler von links 71, der dritte Bandpass von links 79, der dritte Nebenstrahlengang 77 von links sowie der zweite Sensor 85 von links sind lediglich in der Figur 5 dargestellt, in Figur 4 wird zur besseren Übersicht auf eine Abbildung dieser Komponenten verzichtet.

Der Positionierstrahl 89, durch den eine Positionierung des Messstrahls 108 mit Hilfe der Eigenfluoreszenz der Augenlinse 87 realisiert wird (Figur 4), besitzt nur eine kurze Fokuslänge. Dies impliziert einen steilen Strahlen- oder Lichtkegel, der eine hohe Auflösung in Richtung des Hauptstrahlengangs 65 aufweist und damit eine genaue Tiefenpositionierung vor dem Auge 63 gewährleistet. Das Fluoreszenzmessgerät 61 weist ein konfokales System auf, durch das ein gemeinsamer Fokuspunkt einer Anregung des Positionierstrahls 89 und einer angeregten Eigenfluoreszenz 91 der Augenlinse 87 gewährleistet ist. Hierdurch wird sichergestellt, dass nur die angeregte Eigenfluoreszenz 91 durch den ersten Sensor 83 erfasst und gemessen wird.

Zur Verdeutlichung sei hierzu auf die Figur 6a verwiesen, in der in schematischer Darstellung anhand einer ersten unten dargestellten Konstellation 93 für ein konfokales System 92 mit einer Linse 95 und einem Objekt 97 ein Positionierungsfehler bei einer Fokussierung eines elektromagnetischen Strahls 99 dargestellt ist. Die in Figur 6a oben dargestellte zweite Konstellation 101 zeigt dagegen das konfokale System 92 mit der Linse 95, die unter Berücksichtigung einer Wellenlänge des elektromagnetischen Strahls 99 in einem optimalen Abstand zu dem Objekt 97 positioniert ist. Der elektromagnetische Strahl 99 ist bei diesem konfokalen System 92 nunmehr exakt auf das Objekt 97 fokussiert, Anregung und Fluoreszenz besitzen denselben Strahlengang.

Beim Messstrahl 108, der durch die elektromagnetische Quelle 81 angeregt wird, ist dies umgekehrt. Hier würde ein längerer Fokus ein Messsignal bei Positionsfehlern weniger beeinflussen, was wiederum eine größere Toleranz bei der Positionierung bedeutet. Eine größere Fokuslänge verursacht gleichzeitig aber auch eine kleinere numerische Apertur und damit auch weniger eingefangene elektromagnetische Strahlung bzw. weniger eingefangenes Licht, ausgehend von der angeregten Fluoreszenz. Dies führt zu einer geringeren Empfindlichkeit des Fluoreszenzmessgeräts 61. Hier muss ein Kompromiss eingegangen werden. Getrennte Strahlengänge von Anregung und detektierter Emission, wie sie anhand eines nicht-konfokalen Systems 103 in Figur 6b schematisch gezeigt sind, können nicht verwendet werden. Wenn der Fokuspunkt von Anregung 104 und Fluoreszenz 105 nicht deckungsgleich ist und der Abstand zu dem Auge 63 nicht exakt stimmt, ist es möglich, dass eingefangene elektromagnetische Strahlung nicht von der angeregten Fluoreszenz 105 stammt, wodurch die Messung merklich verfälscht wird.

Dieses Problem wird mit dem konfokalen System innerhalb des Fluoreszenzmessgeräts 61 nach den Figuren 4 und 5 gelöst. Dieses reagiert tolerant auf Positionierfehler.

Ein weiterer Vorteil, der sich durch das konfokale System, ergibt, ist, dass mit der Anregung des Messstrahls 108, Emissionen 109, 111 mit zwei Fluoreszenzwellenlängen erfasst werden können. Würden die verschiedenen Fluoreszenzwellenlängen örtlich getrennt gemessen, könnten regionale Konzentrationsunterschiede am Auge zu Messfehlern führen. Bei dem Fluoreszenzmessgerät 61 weisen beide Fluoreszenzwellenlängen und die Anregungswellenlänge einen gemeinsamen Fokuspunkt auf der Kornea des Auges 63 auf. Die zusammen erfassten Emissionen 109, 111 können durch die Strahlteiler 67, 69, 71 spektral zerlegt und von den Sensoren 83, 85 erfasst werden.

Bei dem Fluoreszenzmessgerät 61 sind die als dichroitische Spiegel ausgebildeten Strahlteiler 67, 69, 71 und die Interferenzbandpässe 79 auf einen bestimmten Winkel optimiert. Die Interferenzbandpässe 79 werden senkrecht zur Oberfläche durchstrahlt. Bei den Strahlteilern 67, 69, 71 bzw. dichroitischen Spiegeln sind Neigungen von 45° zu dem Hauptstrahlengang 65 vorgesehen. Die Strahlverläufe in den Figuren 4 und 5 erfüllen alle diese Bedingungen, wenn mit Hilfe von Linsen elektromagnetische Strahlen kollimiert die Optik durchlaufen.

Beim Messstrahl 108 und beim Positionierstrahl 89 muss ein Teil der vom Auge 63 als Emission 75 emittierten oder reflektierten elektromagnetischen Strahlung einen oder zwei der dichroitischen Spiegel 67, 69 durchlaufen. Diese elektromagnetischen Strahlen 89, 108 treffen nicht senkrecht auf die Oberflächen dieser dichroitischen Spiegel 67, 69, hierdurch werden sie gebrochen. Nach Durchstrahlen eines Filtersubstrats der dichroitischen Spiegel 67, 69 werden sie wieder zurückgebrochen. Der dabei entstehende Strahlversatz beträgt pro durchlaufenen dichroitischen Spiegel 67, 69 0,26 mm. Bei einer Positionierung der dichroitischen Spiegel 67, 69, 71 und der Gestaltung der Strahlengänge 65, 73, 75, 77 des Fluoreszenzmessgeräts 61 ist dies berücksichtigt.

Anhand mehrerer Untersuchungen am Auge 63 hat sich gezeigt, dass die Positionierung des Positionierstrahls 89 und des Messstrahls 108 von großer Bedeutung ist. Ein Grund hierfür sind die sehr unterschiedlichen Eigenfluoreszenzen der verschiedenen Regionen des Auges 63. Bei einer Konzeption des Fluoreszenzmessgeräts 61 werden die Daten des Gullstrandschen Auges, das ein Normauge darstellt, das sich aus der Messung einer großen Anzahl menschlicher Augen ableitet, zu Grunde gelegt. Dabei sind relevante Abmessungen, Radien und Brechungsindizes des Gullstrand'schen Auges berücksichtigt.

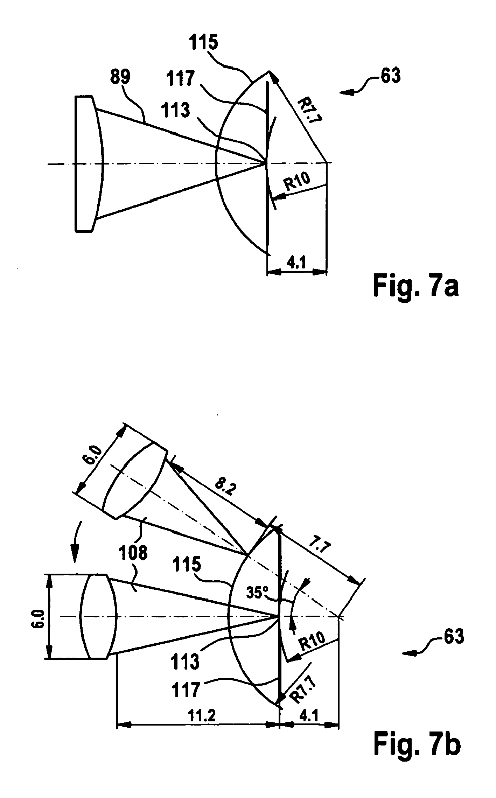

Die Figuren 7a und 7b zeigen Details zu einer Positionierung von dem Positionierstrahl 89 bzw. dem Messstrahl 108 aus den Figuren 4 bzw. 5, die Zahlen stellen Abstände und Radien in Millimetern dar. Bei Durchführung einer Untersuchung des Auges 63 durch das Fluoreszenzmessgerät 61 ist vorgesehen, dass der Positionierstrahl 89 dabei genau auf das Auge trifft (Figur 7a). Dadurch ist sichergestellt, dass der komplette Strahlenkegel dieser von dem Positionierstrahl 89 erzeugten Anregung durch die Pupille auf die Augenlinse 113 trifft. Somit wird eine maximale Anregung und Empfindlichkeit erzielt.

Das Fluoreszenzmessgerat 61 ist des weiteren derart ausgebildet, dass ein Fokuspunkt des Messstrahls 108 auf der Kornea 115 liegt und im weiteren Verlauf der Positionierung (Pfeil) auf der Iris 117 landet (Figur 7b). Hierbei wird die wesentlich geringere Eigenfluoreszenz der Iris 117 gegenüber der Linse 113 des Auges 63 der Sklera (Lederhaut) genutzt, wodurch das Messsignal weniger verfälscht wird. Wie auch beim Positionierstrahl 89 reduziert ein senkrechter Einfall die Reflexion.

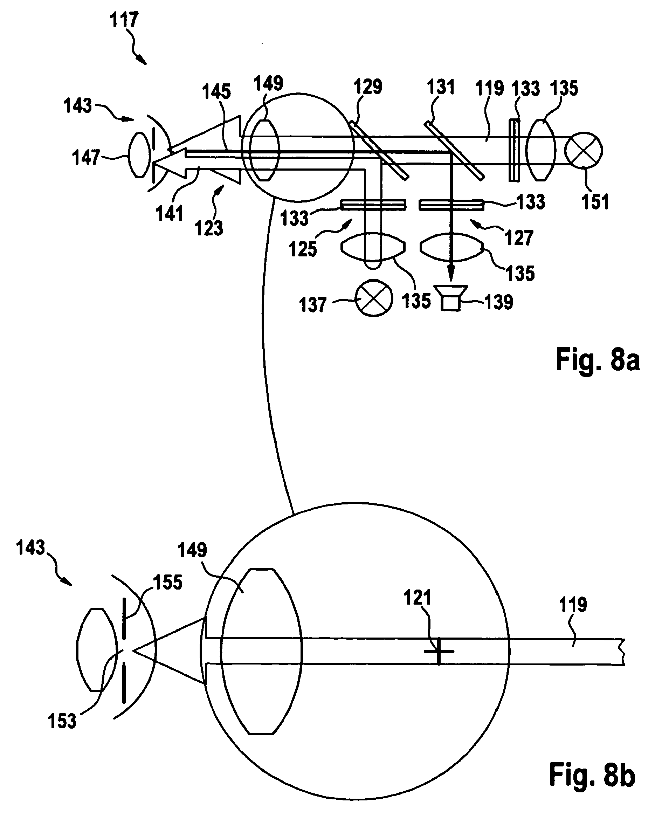

Die Figuren 8a und 8b zeigen in schematischer Darstellung ein konfokales Fluoreszenzphotometer bzw. Fluoreszenzmessgerät 117 mit einer Hintergrundbeleuchtung (Backlight) 119, die von einer Beleuchtungsquelle 151 erzeugt wird, und eine Markierung 121 bzw. einen Orientierungspunkt (Reticle) zur besseren Positionierung des Fluoreszenzmessgeräts 117.

Ähnlich wie in den voranstehenden Figuren weist das in der Figur 8a dargestellte Fluoreszenzmessgerät 117 einen Hauptstrahlengang 123 sowie einen ersten und einen zweiten Nebenstrahlengang 125, 127 auf. Figur 8b zeigt hierzu vergrößerte Details. Des weiteren ist dieses Fluoreszenzmessgerät 117 mit Strahlenteilern 129, 131, Bandpässen 133 sowie Linsen 135 ausgestattet. Eine in einem ersten Nebenstrahlengang 125 von links angeordnete Quelle 137 für elektromagnetische Strahlung oder Licht ist zur Bereitstellung einer Anregung 141 des Auges 143 vorgesehen. Eine Eigenfluoreszenz 145 der Augenlinse 147 wird aus dem Hauptstrahlengang 123 des Fluoreszenzmessgeräts 117 über den zweiten Strahlteiler 133 von links in den zweiten Nebenstrahlengang 127 von links ausgekoppelt und von dem dort angeordneten Sensor 139 detektiert bzw. erfasst.

Bei diesem konfokalen Fluoreszenzphotometer bzw. Fluoreszenzmessgerät 117 wird die Anregung 141 mit einer Anregungswellenlänge erzeugt und die Eigenfluoreszenz 145 mit einer Fluoreszenzwellenlänge detektiert. Mit Hilfe der Markierung 121 (Reticle), die hinter einer Austrittslinse 149 sitzt, hat ein Benutzer oder Patient ein Ziel, auf das er sich während einer Messung oder Untersuchung seines Auges 143 konzentrieren kann. In Verbindung mit der Hintergrundbeleuchtung 119 (Backlight), die zum einen zur Beleuchtung für der Markierung 121 (Reticle) und zum anderen für ein Verkleinern der Pupille 153 über die Iris 155 benötigt wird, lässt sich durch die Verwendung von Schwellwerten (Treshholds) ein genaue Positionierung des Fluoreszenzmessgeräts 117 vor dem Auge 143 realisieren. Die Markierung 121 ist in diesem Beispiel als ein Kreuz ausgebildet. Die von der Beleuchtungsquelle 151 erzeugte Hintergrundbeleuchtung 119 strahlt nur schwach, so dass das Auge 145 bei der Untersuchung nicht zu sehr gereizt wird. Ein zur Anregung 141 vorgesehener elektromagnetischer Strahl wird bei der Unersuchung von der Quelle 137 für nur wenige Millisekunden erzeugt und ist somit kaum spürbar.

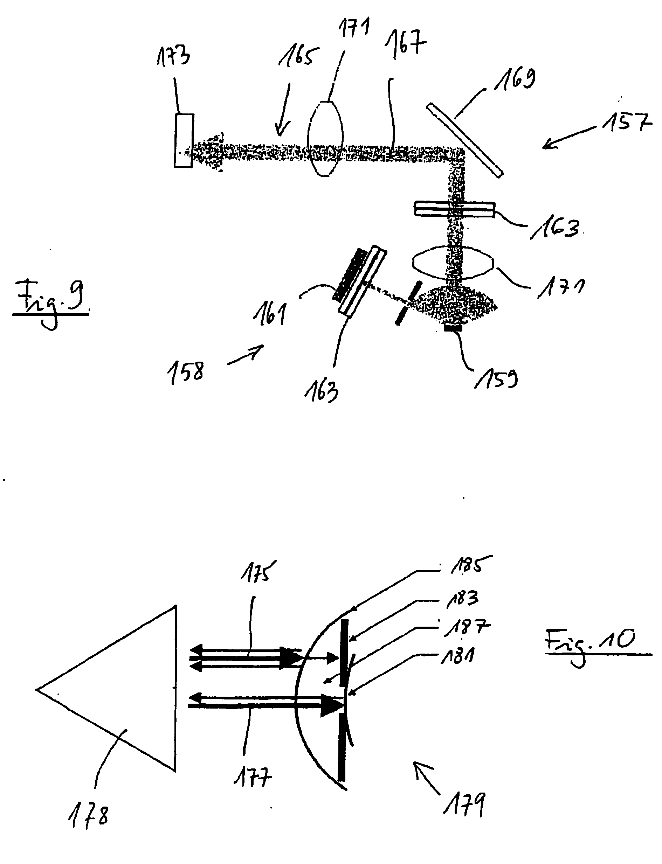

Figur 9 zeigt in schematischer Darstellung eine Einrichtung zur Messung einer Strahlungsleistung einer elektromagnetischen Quelle 159 eines Fluoreszenzmessgeräts 157. Für die Stabilisierung der Strahlungsleistung werden von der Quelle 159 ausgestrahlte elektromagnetische Strahlen 160 mit einer Photodiode 161 kontinuierlich gemessen. Um die Spektralverschiebung durch Temperaturänderung auszugleichen, befindet sich vor der Photo- bzw. Monitordiode 161 derselbe Bandpass 163 wie in einem eigentlichen Hauptstrahlengang 165 für die Anregung. Die Korrektur der Quelle 159 und somit der Strahlungsleistung erfolgt in Echtzeit.

Dieses in Figur 9 vorgestellte Fluoreszenzmessgerät 157 weist zudem einen Strahlteiler 169 sowie Linsen 171 auf. Die von der Quelle 159 erzeugte Anregung 167 wird durch den Strahlteiler 169 in den Hauptstrahlengang 165 umgelenkt und erreicht somit eine zu untersuchende Probe 173. Da im Strahlengang zwischen der Quelle 159 und der Probe 173 sowie zwischen der Quelle 159 und der Photodiode 161 dieselben optischen Einrichtungen, insbesondere dieselben Bandpässe 163, angeordnet sind, ist gewährleistet, dass bei der Photodiode 161 elektromagnetische Strahlen mit derselben Strahlungsleistung wie auf der Probe 173 auftreffen, so dass die Strahlungsleistung genau bestimmt und die Quelle 159 somit stabilisiert werden kann.

Wegen seiner anatomischen und physiologischen Eigenheiten ist das Auge wie geschaffen für den Einsatz optischer Diagnostik- und Therapiemethoden. Die ersten Versuche, mit gebündelten Lichtstrahlen bestimmte Augenkrankheiten zu heilen, reichen in die 50er Jahre des 20. Jahrhunderts zurück. Es wurde damals gezeigt, dass sich gebündeltes Sonnenlicht als Operationsinstrument einsetzen lässt.

Mit den hier vorgestellten Fluoreszenzmessgeräten sind bspw. auch lasergestützte Anwendungen auf Basis photometrischer und photomechanischer Effekte möglich, wenn die Quellen der Fluoreszenzmessgeräte entsprechend als Laser ausgebildet sind. Diagnostische Methoden zur Untersuchung mit den Fluoreszenzmessgeräten nutzen die unterschiedlichen Reflexionseigenschaften der zu untersuchenden Objekte, insbesondere von Augen, aus. Beispiele hierfür sind Messungen retinaler Nervenfaserschichtdicken durch die Detektion des Polarisationszustandes (Messung des Stokes-Vektors) oder kohärenzoptische Messsysteme zur Ermittlung intraokularer Distanzen (optische Kohärenztomographie, OCT).

Die spektrale Charakteristik der durch das Gewebe des Auges emittierten elektromagnetischen Strahlung liefert Informationen über die Konzentrationen einzelner am Stoffwechsel des Auges beteiligter Substanzen. Mit den hier vorgestellten Fluoreszenzmessgeräten werden stoffspezifische Fluoreszenzen mit einer Miniaturoptik erfasst.

Die Optik der vorliegenden Fluoreszenzmessgeräte ist im Vergleich zu der Optik bekannter Fluoreszenzmessgeräte verkleinert, eine Funktionalität ist zudem erhöht und verbessert. Bekannte Fluorimeter sind derart groß bemessen, dass nur ein Diagnosestrahl pro Auge eingesetzt werden kann.

Ein in Figur 10 schematisch dargestelltes Fluoreszenzmessgerät 178 ist dagegen so klein, dass zwei getrennte Strahlen 175, 177, die von diesem Fluoreszenzmessgerät 178 erzeugt werden, an einem Auge 179 gleichzeitig gemessen werden können. Einer der beiden Strahlen dient dabei als Messstrahl 175, der die gewünschten Informationen ausliest, der andere als Positionierhilfe (Positionierstrahl 177).

Die Positionierung wird mit Hilfe unterschiedlich starker Eigenfluoreszenzen der verschiedenen Gewebesubstanzen im Auge 179 realisiert. Untersuchungen zeigen, dass die Augenlinse 181 bei geeigneter optischer Anregung eine ca. hundertfach höhere Fluoreszenzintensität als die angrenzende Iris 183 besitzt. Über eine Mindestintensitätsgrenze des Positionierstrahls 177 wird bestimmt, wann der Messstrahl 175 ideal ausgerichtet ist und gemessen werden kann.

Ideal bedeutet hier, dass der Messstrahl 175 so auf die Kornea 185 des Auges 179 fokussiert werden sollte, dass der Messstrahl 175 in seinem weiteren Verlauf auf die Iris 183 trifft. Dies reduziert unerwünschte Hintergrundfluoreszenzen auf ein Minimum, denn die Iris 183 fluoresziert im relevanten Spektrum geringer als die Lederhaut oder die Augenlinse 181 hinter einer Vorderkammer 187 des Auges 179.

Der Messstrahl 175 regt mit einer Wellenlänge von bspw. 465 nm die in dem Auge 179 zu detektierenden Substanzen an. Die in Figur 10 nicht weiter dargestellte Optik des schematisch dargestellten Fluoreszenzmessgeräts 178, das ähnlich wie in den voranstehenden Figuren dargestellte Fluoreszenzmessgeräte aufgebaut ist, weist einen gemeinsamen Hauptstrahlengang für bei einer Untersuchung erzeugten elektromagnetische Strahlen auf. Dieser Hauptstrahlengang befindet sich in der Mitte eines Optikzylinders. Die Nebenstrahlengänge verlaufen senkrecht zu dem Hauptstrahlengang und werden mit jeweils um 45 Grad gedrehten dichroitischen Spiegeln ein- bzw. ausgekoppelt. Mit dieser Ausgestaltung ist es möglich, den Strahlengang bspw. Hauptstrahlengang zur Anregung gleichzeitig in entgegengesetzter Richtung zum Einfangen der Fluoreszenzen zu nutzen, so dass auch hier ein konfokales System vorliegt. Die Fluoreszenzwellenlängen des Messstrahls betragen bspw. 520 nm und 590 nm. Sie werden innerhalb des Fluoreszenzmessgeräts 178 gemeinsam eingefangen und dann mit Hilfe der dichroitischen Spiegel und von Interferenzbandpässen spektral zerlegt und gemessen. Details hierzu sind in den voranstehenden Figuren dargestellt.

Der Hauptstrahlengang ist in der Optik des Fluoreszenzmessgeräts 178 weitgehend mittig angeordnet. Anregende elektromagnetische Strahlen werden wieder über dichroitische Spiegel in den Hauptstrahlengang eingekoppelt und auf die Augenlinse 181 fokussiert. Die angeregte Eigenfluoreszenz der Augenlinse 181 von bspw. 520 nm wird in die Hauptstrahlengänge kollimiert und über zwei dichroitische Spiegel in einen der Nebenstrahlengänge ausgekoppelt. Zur besseren spektralen Trennung werden auch hier wieder Interferenzbandpässe eingesetzt. Beim Positionierstrahl 177 wird nur eine Fluoreszenzwellenlänge gemessen.

Die elektromagnetischen Strahlen oder das Licht zur Anregung liefert eine als LED-Lampe ausgebildete Quelle. Diese LED-Lampe emittiert in dem gewünschten Spektrum und ist sehr leistungsstark.

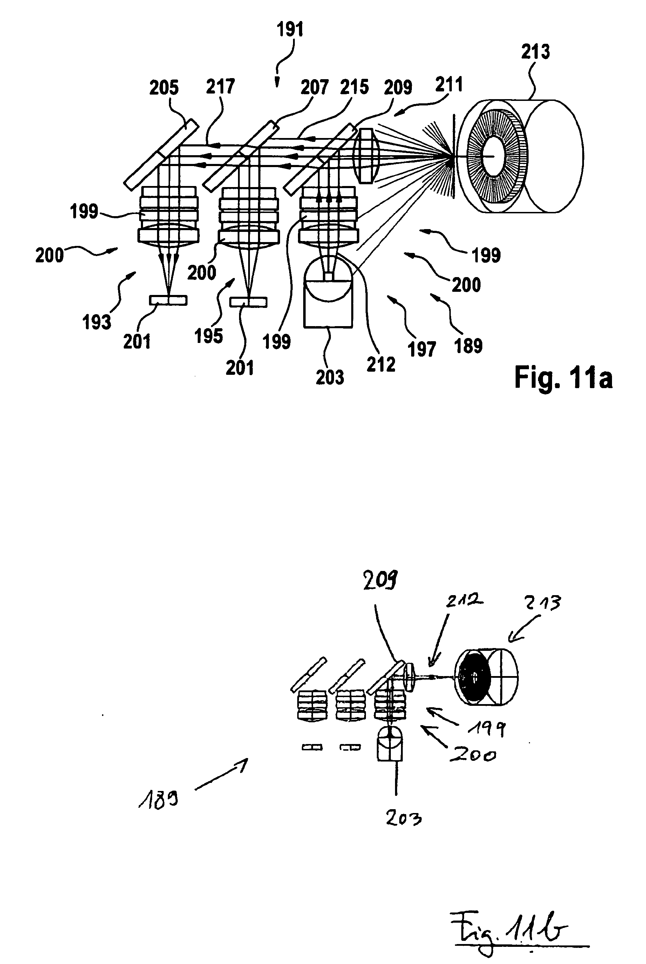

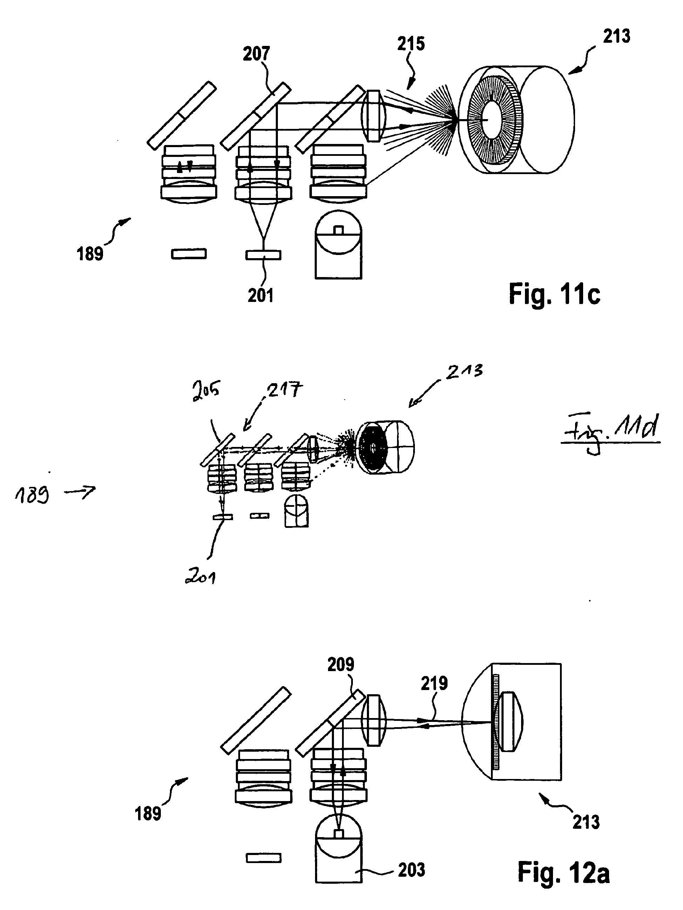

Die Figuren 11a, 11b, 11c, 11d zeigen eine weitere Ausgestaltung eines Fluoreszenzmessgeräts 189 in schematischer Darstellung mit einem Hauptstrahlengang 191 und drei Nebenstrahlengängen 193, 195, 197, wobei in den beiden von links betrachtet ersten Nebenstrahlengängen 193, 195 neben optischen Modulen wie Bandpässen 199 und Linsen Sensoren 201 zur Detektion von zu empfangenen elektromagnetischen Strahlen angeordnet sind. In dem dritten Nebenstrahlengang 197 sind neben einer elektromagnetischen Quelle 203 weitere optische Einrichtung, wie mindestens eine Linse 200 und ein Bandpass 199, vorgesehen. In dem Hauptstrahlengang 191 ist neben den Strahlteilern 205, 207, 209 eine Kondensorlinse 211 vorgesehen. Mit dem Fluoreszenzmessgerät 189 ist bspw. eine Untersuchung eines Auges 213 durchführbar.

Bei einer Herstellung des Fluoreszenzmessgeräts 189 dienen CAD-Daten eines Entwurfs als geometrische Grundlage für eine Simulation. Sie stimmen somit exakt mit denen des später gefertigten Fluoreszenzmessgeräts 189 überein. Bei der Optik des Fluoreszenzmessgeräts 189 wird die elektromagnetische Strahlung der Anregung 212 kollimiert und durch zwei Interferenzbandpässe 199 gestrahlt. Durch die Änderung der Einkopplung in den Hauptstrahlengang 191 ist hierfür nur ein dichroitischer Spiegel 211 vorgesehen. Eine Fokussierung auf die Kornea des Auges 213 übernimmt eine Kondensorlinse 211. Die angeregten Fluoreszenzen 215, 217 nehmen den entgegengesetzten Weg, transmittieren durch eine Kollimatorlinse und den ersten dichroitischen Spiegel 205. Am zweiten dichroitischen Spiegel 207 findet wieder die spektrale Auftrennung der emittierten elektromagnetischen Strahlung statt. Eine Fluoreszenz 215 mit einer kürzeren Wellenlänge von 520 mm wird aus dem Hauptstrahlengang 111 unter einem 90°-Winkel ausgekoppelt und nach zwei Interferenzbandpässen 199 auf den Sensor 201 gebündelt. Ein langwelligerer Anteil der Fluoreszenz 217 mit einer Wellenlänge von 590 nm wird transmittiert und mit einem dichroitischen Spiegel 205 auf die dem Hauptstrahlengang 191 folgenden Interferenzbandpässe umgelenkt. Danach folgt eine Fokussierung auf den Sensor 201.

Die Figuren 11b, 11c, 11d zeigen jeweils das in Figur 11a vorgestellte Fluoreszenzmessgerät 189, wobei in jeweils einer dieser drei Figuren lediglich einer der bei einer Untersuchung des Auges 213 eingesetzten elektromagnetischen Strahlen 212, 215, 217 dargestellt ist.

Dabei ist in Figur 11b der Strahlengang der Anregung 212 dargestellt.

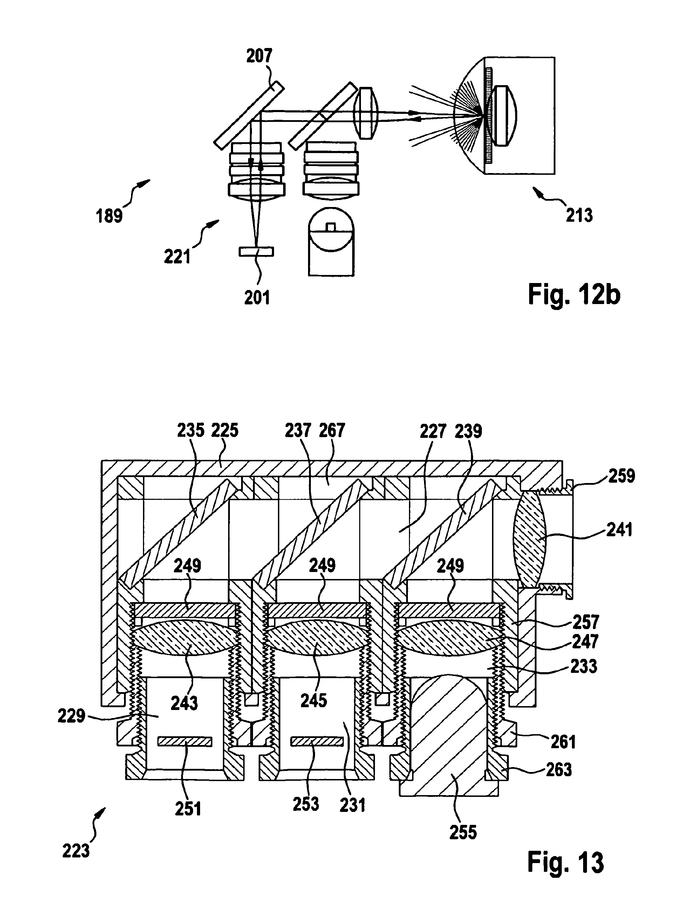

Die Figuren 12a und 12b zeigen ein Verhalten eines Positionierstrahls 219 und eine zugehörige reflektierte Anregung 221 des Positionierstrahls 219. Ein Strahlengang der reflektierten Anregung 221 für den Positionierstrahl 219 ist in Figur 12b gezeigt.

Mit dem Fluoreszenzmessgerät 189 ist eine hohe Flexibilität erzielbar. Dies bedeutet, dass ein Höchstmaß an Bestükkungsmöglichkeiten von Linsen, Blenden, Filtern und Quellen zur Bereitstellung der Anregung 212, 219 für Mess- bzw. Positionierstrahl gewährleistet ist.

Eine Optik des Messstrahls 212 ist mit der des Positionierstrahls 219 kompatibel. Ein Design für den Messstrahl 212 erfüllt automatisch die Anforderungen des Positionierstrahls 219. Unterschiedliche Fokuslängen der Austrittslinsen sind nicht gegeben.

Für die Linsenwahl kommen herkömmliche Standardlinsen in Betracht. Frenselinsen in kleinen Dimensionen sind ebenso denkbar. Bei Plastiklinsen besteht das Risiko der Eigenfluoreszenz. Mögliche Fehlerquellen sind bei Glaslinsen auszuschließen. Da es sich hier nicht notwendigerweise um ein exakt abbildendes System handelt, können monochromatische und chromatische Fehler in Grenzen akzeptiert werden. Dadurch ist es möglich, unkorrigierte Linsen, nämlich sphärische Standardlinsen, einzusetzen.

Figur 13 zeigt in schematischer Darstellung ein Fluoreszenzmessgerät 223 mit einem Gehäuse 225, das aus Aluminium CNC-gefräst ist. Innerhalb des Gehäuses 225 sind ein Hauptkanal 227 für einen Hauptstrahlengang sowie davon unter einem Winkel von 90° abgezweigte Nebenkanäle 229, 231, 233 für Nebenstrahlengänge vorgesehen. Innerhalb des Gehäuses 225 sind als dichroitische Spiegel ausgebildete Strahlteiler 235, 237, 239, Linsen 241, 243, 245, 247, Interferenzbandpässe 249, Sensoren 251, 253 sowie eine Quelle 255 für elektromagnetische Strahlen vorgesehen.

Eine variable Positionierung der Linsen 241, 243, 245, 247, Blenden und Filter mit einem Durchmesser von ca. 6 mm wird durch einschraubbare Hülsen 257, 259, 261, 263 in dem Gehäuse 225 realisiert. Die exakte Platzierung der Quelle 255 und Sensoren 251, 255 im Fokuspunkt erfolgt mit einer zweiten Hülse 263, die in ein Innengewinde der ersten Hülse 261 geschraubt wird. Die dichroitischen Spiegel 235, 237, 239 werden durch Vertiefungen 267 innerhalb des Hauptkanals 227 genau positioniert. Dieses Fluoreszenzmessgerät 223 kann modular aufgebaut werden und bietet ein Höchstmaß an Flexibilität bzgl. einer Bestückung mit den vorgestellten optischen Elementen.

Das Gehäuse eines Fluoreszenzmessgeräts lässt das sich ohne größere Designänderungen im Spritzgussverfahren und somit auch in der Massenproduktion herstellen. Ein derartiges Gehäuse wird bspw. in einem stereolithografischen Verfahren hergestellt.

Bei diesem Verfahren des sog. Rapid Prototyping wird mit Hilfe fokussierter Laserstrahen eine gewünschte Form für die Halbschale des Gehäuses aus einem flüssigen Polymer schichtweise herausgearbeitet. In einem Fokuspunkt ist die Laserintensität hoch genug um eine Polymerisation zu erzwingen, d.h. das flüssige Polymer härtet an dieser Stelle aus. Ist eine Schicht geschrieben, wird sie abgesenkt, so dass sie wieder von einem dünnen flüssigen Polymerfilm überzogen wird. Dieser kann dann wieder strukturiert werden. Das Auflösungsvermögen der Stereolithografie liegt bei ca. 100 µm. Zur Aushärtung kommt das so gewonnene Gehäuse in einen UV-Ofen. Hier findet eine Auspolimerisation des Stereolits statt.

Eine Vervielfachung des Stereolits wird mit einem Vakuumgießverfahren umgesetzt. Die Gießform entsteht aus einem Silikonabguss des Stereolits. Mit der Silikonform lassen sich zwischen fünfzehn und dreißig Teile gießen, deren Materialeigenschaften mit denen des späteren Serien-Spritzgussteiles übereinstimmen.

Die zwei Halbschalen für das Gehäuse sind vorzugsweise mit Kerben versehen, die zur Aufnahme von Linsen, Filtern, Blenden und dichroitischen Spiegeln dienen. Damit kein Umgebungslicht von außen eindringt bzw. zwischen den einzelnen Kanälen überkoppelt, wird eine doppelte Lichtfalle eingebaut. Zwei Halbschalen werden mit Ösen für Schnappverschlüsse zusammengehalten. Zwei halbzylindrische Stege pro Halbschale dienen der Positionierung einer Elektronikplatine und fixieren zusätzlich die beiden Halbschalen.

Das in Figur 13 gezeigte System für das Fluoreszenzmessgerät 223 ist zwar flexibler, da es eine stufenlose Positionierung der optischen Komponenten bzw. Elemente zulässt, allerdings ist es aufwendiger zu fertigen und serienferner aufgebaut. Deshalb ist ein Fluoreszenzmessgerät zu bevorzugen, das direkt für eine Serienfertigung geeignet ist. Die Lage der Linsen und Filter wird hierbei fest vorgegeben, trotzdem ist eine variable Positionierung der LED als Quelle für elektromagnetische Strahlen oder Licht und der Sensoren möglich.

Die Halbschale des Prototyps weist eine hohe Detailtreue auf. Ein Steg und die Kerbe der Lichtfalle zwischen den Kanälen sind sauber herausgearbeitet. Ösen des Schnappverschlusses sind erkennbar angeformt.

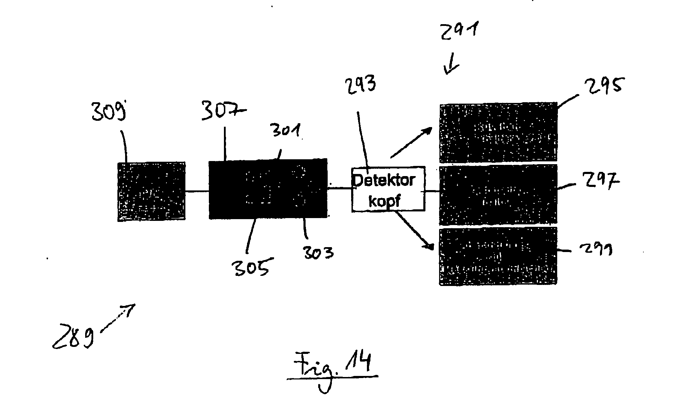

Figur 14 zeigt in schematischer Darstellung eine Vorrichtung 89 mit einem Probenhalter 291, der zur Aufnahme eines anwendungspezifischen optischen Detektorkopfs 293 oder eines wie in den voranstehenden Figuren vorgestellten Fluoreszenzmessgeräts ausgebildet ist. Dieser Probenhalter 291 weist einen Küvettenhalter 295 zur Aufnahme einer Probe, einen Teststreifenhalter 297 sowie eine Abstandshülse 299 für eine Oberflächenmessung auf. Der Probenhalter 291 ist des weiteren mit einem in der Figur 14 schematisch abgebildeten Handmessgerät 301 verbunden, das eine Tastatur 303 und ein Display 305 aufweist. Über eine Schnittstelle 307 bzw. Dockingstation ist das Handmessgerät 301 mit einem Computer 309 verbunden. Mit dem Handmessgerät 301 ist eine Steuerung und Durchführung einer Messung einer Probe mit dem Detektorkopf 293 auch rechnergestützt und/oder automatisiert durchführbar. Es ist ebenso möglich, eine derartige Messung mit dem Computer 309 zu regeln oder zu steuern. Eine Auswertung der Messung kann mit dem Handmessgerät 301 und/oder dem Computer 309 erfolgen.

Im Unterschied zu bekannten Einrichtungen zur optischen Untersuchung, bei denen ein Probenhalter in einem Messgerät angeordnet ist, ist bei der in der Figur 14 gezeigten Vorrichtung 289 ein Messgerät, also der Detektorkopf 293, oder eines der voranstehend beschriebenen Fluoreszenzmessgeräte in dem Probenhalter 291 aufgenommen. Der Probenhalter 291 ist modular aufgebaut und je nach Art einer zu untersuchenden Probe mit einem geeigneten Detektorkopf 293 oder Fluoreszenzmessgerät zur Bereitstellung einer elektromagnetischen Anregung einer geeigneten Wellenlänge mit entsprechend geeigneten Sensoren austauschbar zu bestücken. Des weiteren ist der Probenhalter 291 mit einer xyz-Positioniereinheit ausgestattet, mit der es möglich ist, den Detektorkopf 293 bzw. das Fluoreszenzmessgerät und die Probe in bis zu drei Raumrichtungen relativ zueinander zu positionieren und somit eine geeignete Einstellung zur Durchführung der Untersuchung zu realisieren.

Durch die modulare Ausgestaltung des Probenhalters 291 ist es möglich, dass ein darin eingesetzter bzw. angeschlossener Detektorkopf 293 automatisch erkannt wird. Kalibrierdaten, Kompensationskurven, Konzentrationskurven und dergleichen, die zur Durchführung und Auswertung der Untersuchung geeignet sind, werden in dem Detektorkopf 293 oder in einem entsprechenden Fluoreszenzmessgerät gespeichert und nach einer Übertragung von dem Handmessgerät 301 ausgelesen und für eine Berechnung verwendet. Für die Schnittstelle 307 zu dem Computer 309 ist des weiteren optional eine Remote-Steuerung der Untersuchung sowie eine Offlineverarbeitung von Daten, die während der Untersuchung von dem Handmessgerät 301 gespeichert worden sind, möglich. Die mit der Vorrichtung 289 oder dem Detektorkopf 293 gewonnenen Daten können bspw. auch zur Steuerung oder Regelung von technischen Einrichtungen, etwa in einem Produktionsprozess, genutzt werden. Über die Schnittstelle 307 oder den Computer 309 ist unter Berücksichtigung dieser Daten eine Kommunikation mit derartigen technischen Einrichtungen möglich.

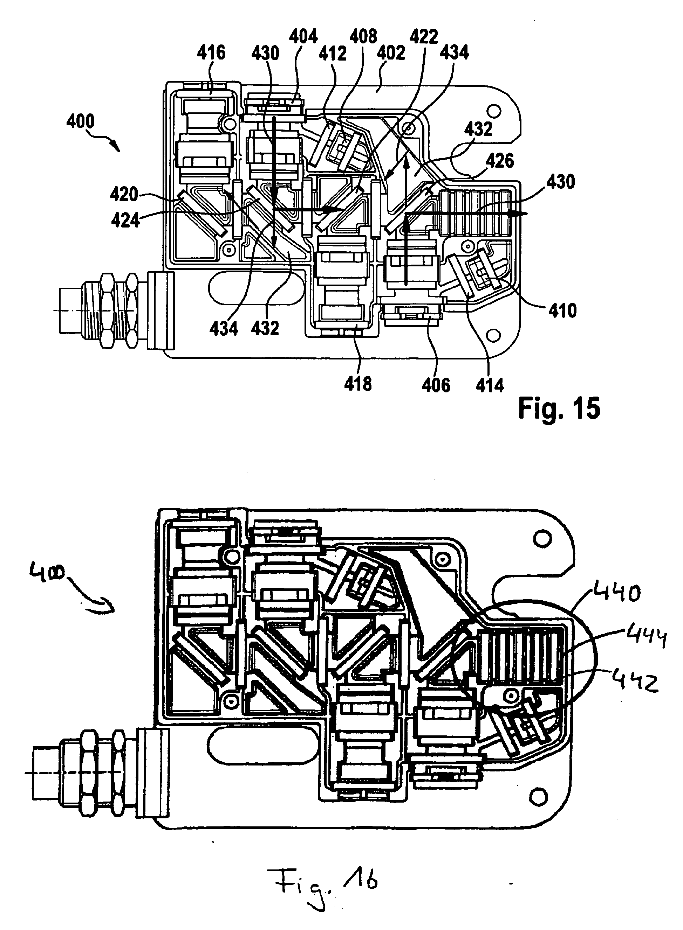

In Figur 15 ist eine mögliche Ausführung des erfindungsgemäßen Messgeräts dargestellt, insgesamt mit der Bezugsziffer 400 versehen.

Es ist zu erkennen, dass alle Bauteile in einem Gehäuse 402 integriert sind. So sind eine erste Quelle 404 und eine zweite Quelle 406 vorgesehen, wobei der ersten Quelle 404 eine erste Monitordiode 408 und der zweiten Quelle 404 eine zweite Monitordiode 410 zugeordnet ist.

Zwischen erster Quelle 402 und erster Monitordiode 408 ist ein optisches Modul, nämlich ein erster Filter (Strahlteiler) 412 vorgesehen. Ebenso ist zwischen zweiter Quelle 404 und zweiter Monitordiode 408 ein zweiter Filter 414 angeordnet.

Weiterhin sind ein erster Detektor 416 und ein zweiter Detektor 418 dargestellt, die jeweils über zugeordnete Strahlteiler 420 und 422 reflektierte Strahlen erfassen. Der erste Filter 412 und der zweite Filter 414 entsprechen in ihren optischen Eigenschaften einem ersten 424 und zweiten weiteren 426 Strahlteiler, so dass die Monitordioden 408 und 410 angepasste Strahlen erfassen.

Pfeile 430 verdeutlichen die Strahlengänge der von dem Messgerät erzeugten Strahlen, wobei Lichtfallen 432 die Menge an Streulicht erheblich reduzieren, so dass ein sehr gutes Messergebnis erzielt werden kann.

Durch die speziell entwickelte Gehäuseform mit den integrierten Lichtfallen 432 ist ein direkter Zugang von Streulicht zu dem Detektorkanal und somit zu den Detektoren 416 und 418 aus geometrischen Gründen nur nach einer vielfachen Reflexion möglich. Dabei sinkt die Strahlenenergie auf ein unbedenkliches Maß ab und verfälscht die Messung nicht. Der Restanteil, der nicht durch die Strahlenteiler 424 und 426 ausgekoppelt wird, wird von den Lichtfallen 432 absorbiert (Pfeile 434).

In Figur 16 ist der Bereich der Austrittsöffnung umrandet 440 dargestellt. In diesem Bereich sind zusätzliche Lichtfallen 442 in Form von Rippen eingearbeitet. Diese reduzieren das Streulicht, das von außen durch eine Eintrittslinse 444 in das System eintritt. Zudem können zwischen die Rippen bzw. in die durch die Rippen gebildeten Vertiefungen weitere Filter eingesetzt werden, die unerwünschte Spektralbereiche blocken.

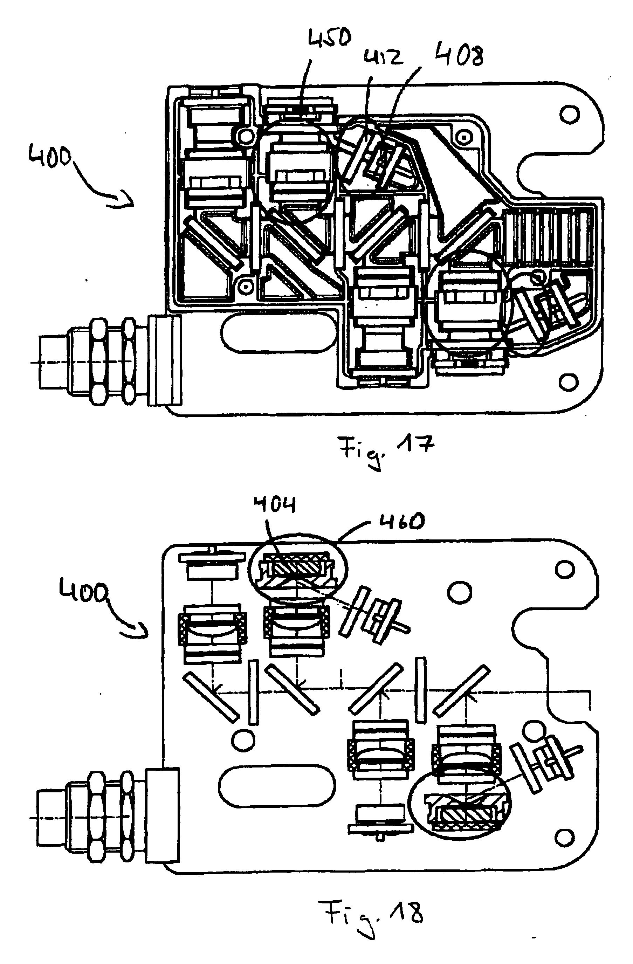

Figur 17 verdeutlicht die Überwachung der Quellen 404 und 406. Für die Überwachung bzw. das Monitoring und die anschließende Regelung der Lichtleistung ist vor die Monitordiode 408 der gleiche Filter 412 wie im Hauptstrahlengang 450 eingebaut. Dies hat den Vorteil, dass eine Lichtleistungsänderung, die ggf. durch den spektralen Drift hervorgerufen ist, nachgeregelt werden kann. Die Position der Monitordiode 408 ist so gewählt, dass Lichteinflüsse, die von außen in den Sensor eindringen, nicht störend auf die Regelung wirken.

Figur 18 verdeutlicht die Kühlung der Quellen 404 und 406. Ein Kühlkörper 460, der die Quelle 404 umgibt, ist so gestaltet, dass dieser das Einsetzen einer Blende vor der Lichtquelle 404 überflüssig macht und gleichzeitig die Ausrichtung der Anregungslichtquelle 404 im Gehäuse übernimmt. Hierzu weist der Kühlkörper 460 eine Öffnung auf.

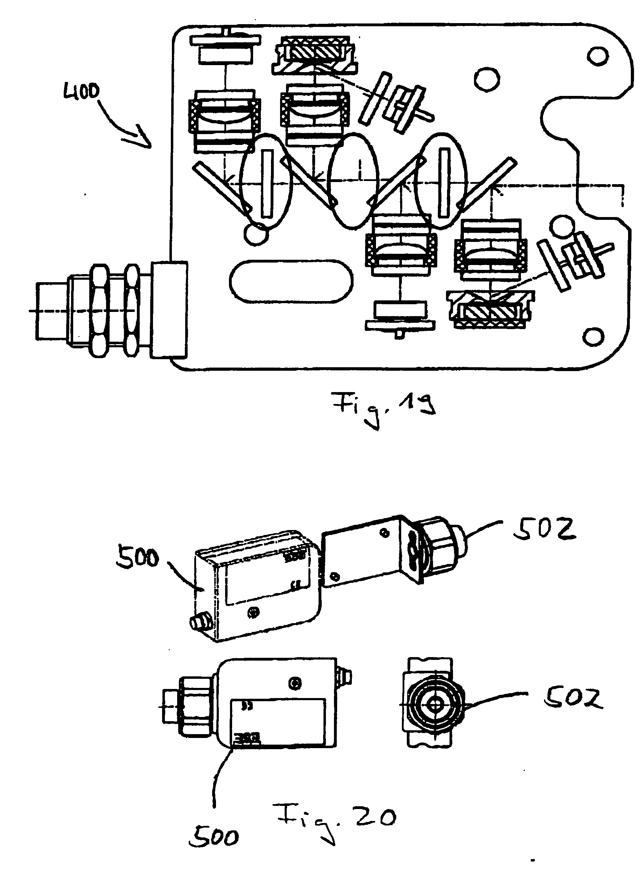

In Figur 19 ist die Reduzierung des Übersprechens zwischen Anregung und Emission verdeutlicht. Durch die verwendete Abbildungsoptik mit einem sehr lang gezogenen Fokusschlauch ist eine geringe Tiefenschärfe erreicht worden. Dies ermöglicht eine einfache Positionierung. Somit ist es jetzt möglich, sehr einfach auf Oberflächen oder auch auf Proben mit einer sehr hohen optischen Dichte zu messen. Bei Off-Axis-Systemen müssen solche Proben exakt positioniert werden bzw. sehr stark verdünnt werden, was immer mit größeren Fehlern verbunden ist und die Reproduzierbarkeit der Messergebnisse verschlechter.

In Figur 20 ist ein Messgerät 500 bzw. ein Sensor mit einer Aufnahme 502 bzw. einem Adapter gezeigt. Hierbei wird der Sensor 500 ohne Frontlinse auf die Aufnahme 502 geschraubt. In der Aufnahme 502 befindet sich die ansonsten direkt an dem Sensor 500 montierte Frontlinse. So wird der Fokus in den Durchfluss des zu messenden Mediums vorverlegt. Die Aufnahme 502 verfügt über einen Standard-1-Zoll-Anschluss und kann somit an eine Leitung angeschlossen werden. Hierfür eignet sich insbesondere ein Kugelhahn, der die Leitung gleichzeitig vor und hinter dem Sensor 502 absperren kann. Somit werden Wartungsarbeiten, wie bspw. das Reinigen oder Tauschen des Messfensters, vereinfacht.

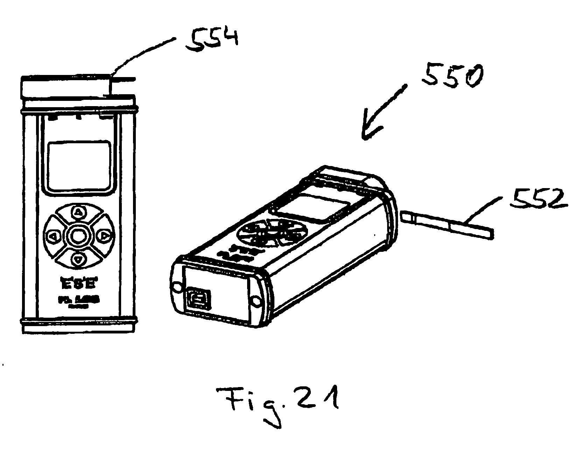

Figur 21 zeigt eine weitere Ausführung des erfindungsgemäßen Messgeräts in einer Bedieneinheit 550. Bei diesem wird ein Teststreifen 552 direkt in eine Aufnahme 554 eingeführt. Der Sensor befindet sich in der Bedieneinheit 550. Der Teststreifen 552 wird von Hand eingeführt und wird während der Messung herausgezogen. Das Messfenster wird über zwei Lichtschranken bestimmt. Da eine relativ große Abstandstoleranz in dem Sensor vorliegt, ist die Führung des Teststreifens 552 verhältnismäßig einfach gestaltet. Die Messung wird nur anerkannt, wenn das Herausziehen in einem festgelegten Zeitfenster stattgefunden hat.

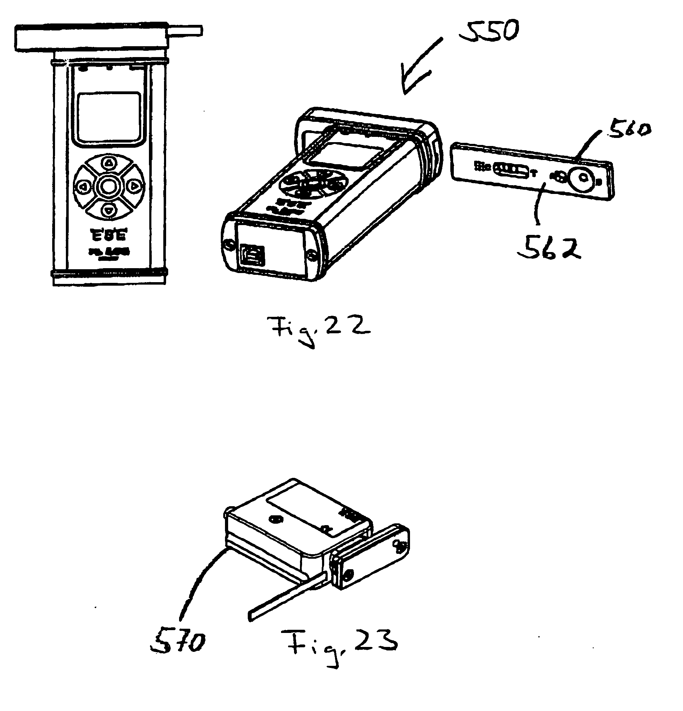

Figur 22 zeigt eine vergleichbare Ausführung mit Bedieneinheit 550. In diesem Fall befindet sich ein Testreifen 560 in einer Kassette 562. Diese Kassette 562 weist sehr hohe Toleranzen auf. Da ein großes Toleranzfenster für die Probenpositionierung besteht, kann der Testreifen 560 in der Kassette 562 sehr einfach gemessen werden.

In Figur 23 ist verdeutlicht, dass der Streifenleser auf einen externen Sensor 570 zu adaptieren ist.

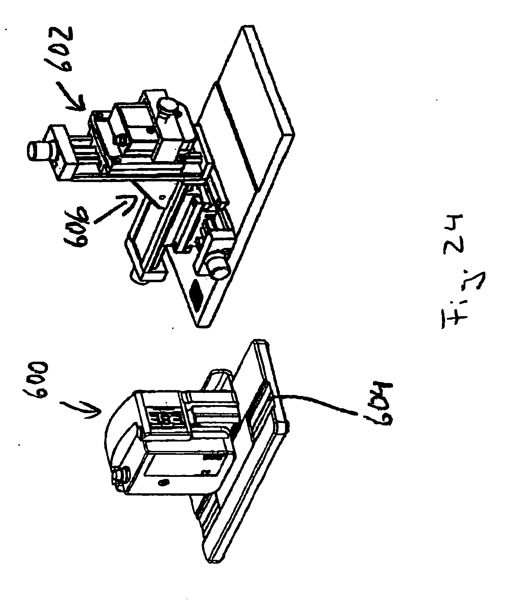

In Figur 24 sind zwei Ausführungsformen 600 und 602 für Oberflächenmessungen dargestellt. Durch die konfokale Optik mit geringer Tiefenschärfe können Fluoreszenzerscheinungen auf Oberflächen bei Umgebungslicht gemessen werden. Die erste Ausführung 600 weist eine Führung 604 für Mikroskopslides auf. Die zweite Ausführung 602 weist eine mechanische xyz-Führung 606 auf.

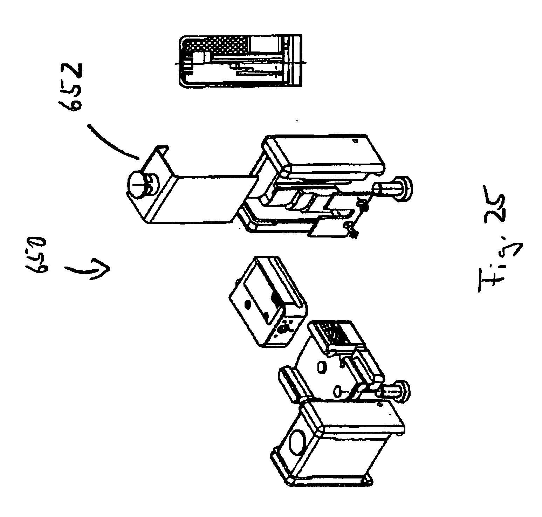

Figur 25 zeigt einen Adapter 650, bei dem sowohl Küvetten in unterschiedlichen Ausführungen (Durchfluss, Makro, Mikro usw.) als auch Mikroskopslides oder auch mit ähnlichen, auch nicht transparenten Proben und Probenhaltern gemessen werden können. Ein Deckel 652 verfügt über Durchflussküvetten über einen separaten Durchgang für Schlauchverbindungen. Die Küvettenposition lässt sich in der Höhe verstellen. Wie bei den PCR-Tubes ist es ebenfalls möglich, die Küvettenaufnahme mit der Auswerteeinheit zu verbinden.

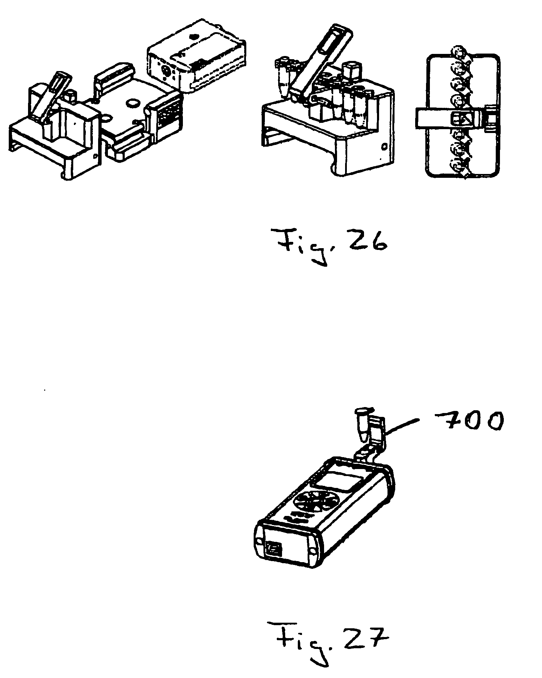

Figuren 26 und 27 zeigen, dass durch die Auslegung des Sensors es erstmals möglich ist, hoch aufgelöst Fluoreszenz in PCR-Tubes zu messen. Es können sowohl einzelne Tubes als auch ganze Stränge gemessen werden. Dies funktioniert sowohl mit 0,5 ml als auch mit 0,2 ml PCR-Tubes. So zeigt Figur 27 einen Sensor, der in der Auswerteeinheit integriert ist. Ein PCR-Tube-Adapter 700 ist direkt an der Auswerteeinheit montiert.

Mit der in den voranstehenden Figuren dargestellten Erfindung wird ein miniaturisiertes Fluoreszenzmessgerät mit erhöhter Funktionalität bereitgestellt. Das verwendete Messprinzip nutzt die Eigenschaft von biologischen Substanzen, bei geeigneter Anregung in einem stoffspezifischen Spektrum Licht zu emittieren. Eine Anregungsenergie wird in Form eines fokussierten elektromagnetischen Lichtstrahls oder Laserstrahls zugeführt. Das System arbeitet mit zwei Optikmodulen, von denen eines zur Positionierung und das andere zur eigentlichen Messung genutzt wird. Eine Größe dieser Optikmodule lässt es zu, dass beide gleichzeitig an einem Auge Fluoreszenzen erfassen können. Sämtliche Fluoreszenzmessgeräte sind konfokal ausgebildet, das bedeutet, dass mindestens ein elektromagnetischer Strahl für eine Anregung der Probe sowie mindestens ein elektromagnetischer Strahl für die Fluoreszenz und/oder Reflexion der Probe zumindest abschnittsweise einen Strahlengang, hier den Hauptstrahlengang, teilen.

LED-Lampen zur Bereitstellung einer Anregungsenergie sind üblicherweise in einem transparenten Epoxidgehäuse verpackt, das drei Aufgaben wahrnimmt. Es schützt eine LED vor Umwelteinflüssen, sorgt für zusätzliche Wärmeabfuhr und kollimiert von der LED emittiertes Licht oder emittierte elektromagnetische Strahlung.

Bei einer Suche nach einer geeigneten LED-Lampe als Quelle für elektromagnetische Strahlung in dem Fluoreszenzmessgerät hat sich herausgestellt, dass LED-Lampen, die ein linsenförmiges Gehäuse aufweisen, mit einem Epoxidgehäuse eine für das bereitzustellende Fluoreszenzmessgerät nicht geeignete Abstrahlcharakteristik aufweisen. Somit ist mit herkömmlichen LED-Lampen bspw. keine Fokussierung auf einer Linse innerhalb eines der Strahlengänge des Fluoreszenzmessgeräts möglich. Erst dadurch ist eine optimale Fokussierung eines elektromagnetischen Strahls, der durch die LED-Lampe erzeugt wird, auf eine Linse innerhalb eines der Strahlengänge des Fluoreszenzmessgeräts möglich. Alternativ ist denkbar, dass für das Fluoreszenzmessgerät eine LED-Lampe mit einer kleinen emittierenden Fläche gewählt wird, so dass ein von ihr abgestrahlter elektromagnetischer Strahl in einem Fokus einen kleinen Lichtfleck erreicht. Derartige Eigenschaften werden bspw. von kleinen sog. SMD-LEDs, die kein Linsengehause und keinen Reflektorring aufweisen, erfüllt.

Die dichroitischen Spiegel kann man als Hochpässe ansehen, die langwelligere elektromagnetische Strahlen transmittieren und kurzwelligere Strahlen reflektieren. Sie sind optimiert auf einen Auftreffwinkel des elektromagnetischen Strahls von 45°. Ihre Aufgabe ist es, die beiden Fluoreszenzen spektral aufzutrennen und elektromagnetische Strahlen der LED in den gemeinsamen Hauptstrahlengang einzukoppeln.

Für diese Spiegel werden dichroitische Beschichtungen benutzt, um die einfallende Energie in zwei oder mehr Strahlen, von denen jeder eine unterschiedliche Wellenlänge hat, aufzuteilen.

Die Messung bzw. Untersuchung und/oder Steuerung des Fluoreszenzmessgeräts sowie eine Auswertung von Messergebnissen wird durch den Computer mittels der Software bzw. eines dafür geeigneten Computerprogramms realisiert. Dieses Computerprogramm bzw. diese Software ist dazu geeignet, sämtliche Schritte eines erfindungsgemäßen Verfahrens zur Messung einer Fluoreszenz mit dem Fluoreszenzmessgerät mit einer entsprechenden Vorrichtung, die den Computer oder eine entsprechende Recheneinheit aufweist, durchzuführen. Die Software kann auf einem beliebigen Computer installiert werden und es ist vorgesehen, dass die Software auf eine CD-ROM gespeichert ist, die in den Computer einzulegen ist, so dass die Software ausgehend von der CD-ROM als Computerprogrammprodukt auf den Computer, insbesondere auf einer Festplatte des Computers, gespeichert wird. Der Computer ist über mindestens eine geeignete Schnittstelle mit der Vorrichtung bzw. dem Fluoreszenzmessgerät zur Untersuchung bzw. Messung der Probe sowie ggf. weiterer für die Untersuchung notwendiger Instrumente verbunden, so dass zwischen der Vorrichtung bzw. dem Fluoreszenzmessgerät und dem Computer sowohl Regelungs- bzw. Steuerdaten als auch Messdaten ausgetauscht werden können.

Mit dem erfindungsgemäßen Messgerät lassen sich Messungen in 500µl PCR-Tubes von 1,0 * 10⁻¹² M und in 200µl PCR-Tubes von 2 * 10⁻¹¹ M vornehmen. Bei einer 1 cm² Küvette ist eine Messung von 5 * 10⁻¹³ M möglich. Dabei handelt es sich um eine Fluoreszeinlösung.

## Patentansprüche

1. Fluoreszenzmessgerät zur Untersuchung einer Probe, das einen Hauptstrahlengang und mindestens ein optisches Modul aufweist und dazu ausgebildet ist, mindestens einen zur Anregung der Probe vorgesehenen elektromagnetischen Strahl bereitzustellen sowie mindestens einen von der Probe emittierten elektromagnetischen Strahl zu empfangen, wobei mindestens zwei dieser elektromagnetischen Strahlen zumindest abschnittsweise in einer Ebene liegen und entlang dem Hauptstrahlengang verlaufen.

2. Fluoreszenzmessgerät nach Anspruch 1, das mindestens eine Quelle zur Bereitstellung elektromagnetischer Strahlen aufweist.

3. Fluoreszenzmessgerät nach Anspruch 1 oder 2, das zur gleichzeitigen Messung von zwei Fluoreszenzfarbstoffen ausgebildet ist.

4. Fluoreszenzmessgerät nach einem der Ansprüche 1 bis 3, bei dem eine Umgebungslichtkompensation vorgenommen wird.

5. Fluoreszenzmessgerät nach einem der Ansprüche 2 bis 4, bei dem die mindestens eine Quelle mit einer Umkapselung gekapselt ist.

6. Fluoreszenzmessgerät nach Anspruch 5, bei dem die mindestens eine Quelle mit einem Aluminiumblock gekapselt ist.

7. Fluoreszenzmessgerät nach Anspruch 5 oder 6, bei dem die Umkapselung eine als Blende dienende Öffnung aufweist.

8. Fluoreszenzmessgerät nach einem der Ansprüche 1 bis 7, das zur gleichzeitigen Messung einer Fluoreszenz und einer Reflexion ausgebildet ist.

9. Fluoreszenzmessgerät nach einem der voranstehenden Ansprüche, das dazu ausgebildet ist, mindestens einen als Positionierstrahl vorgesehenen elektromagnetischen Strahl bereitzustellen.

10. Fluoreszenzmessgerät nach einem der vorstehenden Ansprüche, das als optische Module Filter, Strahlenteiler und/oder Spiegel umfasst.

11. Fluoreszenzmessgerät nach einem der vorstehenden Ansprüche, das Lichtfallen aufweist.

12. Fluoreszenzmessgerät nach einem der Ansprüche 1 bis 11, bei dem die Einrichtung zur Messung der Strahlungsleistung eines von der mindestens einen Quelle emittierten und an einem ersten Ort auftreffenden elektromagnetischen Strahls vorgesehen ist, wobei der elektromagnetische Strahl zwischen der mindestens einen Quelle ein erstes optisches Modul, bspw. einen Bandpassfilter, mit mindestens einer optischen Eigenschaft passiert, und wobei ein Teil des zu messenden elektromagnetischen Strahls zwischen der mindestens einen Quelle und der Monitordiode ein zweites optisches Modul, bspw. einen Bandpassfilter, passiert, das im wesentlichen dieselbe mindestens eine optische Eigenschaft wie das erste optische Modul aufweist.

13. Adapter mit einem Fluoreszenzmessgerät nach einem der Ansprüche 1 bis 12, der derart ausgebildet ist, dass mit diesem Messungen sowohl an Mikroskopslides oder ähnlichen, auch nicht transparenten Proben oder Probenträger als auch an Küvetten durchgeführt werden können.

14. Verfahren zur Untersuchung einer Probe mit einem Fluoreszenzmessgerät, insbesondere mit einem Fluoreszenzmessgerät nach einem der Ansprüche 1 bis 12, das einen Hauptstrahlengang und mindestens ein optisches Modul aufweist, bei dem die Probe mit mindestens einem von dem Fluoreszenzmessgerät bereitgestellten elektromagnetischen Strahl angeregt wird und mindestens ein von der Probe emittierter elektromagnetischer Strahl von dem Fluoreszenzmessgerät empfangen wird, wobei mindestens zwei dieser elektromagnetischen Strahlen zumindest abschnittsweise in einer Ebene entlang dem Hauptstrahlengang geführt werden.

15. Verfahren nach Anspruch 14, bei dem mittels des Fluoreszenzmessgeräts mindestens ein als Positionierstrahl vorgesehener elektromagnetischer Strahl und mindestens ein als Messstrahl vorgesehener elektromagnetischer Strahl bereitgestellt werden.

16. Verfahren nach einem der Ansprüche 14 oder 15, bei dem eine Oberfläche eines Bauteils untersucht wird.

17. Verfahren nach einem der Ansprüche 14 oder 15, bei dem eine Probe in einem Teststreifen untersucht wird.

18. Verfahren nach einem der Ansprüche 14 oder 15, bei dem in einer dünnen Schicht gemessen wird.

19. Verfahren nach einem der Ansprüche 14 oder 15, bei dem in einem PCR-Tube gemessen wird.

20. Verfahren nach einem der Ansprüche 14 oder 15, bei dem vorgesehen ist, dass sich ein Auge bei einer Untersuchung auf eine Markierung innerhalb des Fluoreszentmessgeräts konzentrieren kann.

21. Verfahren nach einem der Anspruch 14 bis 20, bei dem mit einer Beleuchtungsquelle des Fluoreszenzmessgerät eine Hintergrundbeleuchtung für die Markierung bereitgestellt wird, wobei durch Hintergrundbeleuchtung die Pupille des Auges bei der Untersuchung verkleinert wird.

22. Verfahren nach einem der Ansprüche 14 bis 21, bei dem eine Strahlungsleistung eines von mindestens einer Quelle erzeugten elektromagnetischen Strahls mit einer Einrichtung stabilisiert wird.

23. Verfahren nach Anspruch 22, bei dem mit einer Monitordiode der Einrichtung die Strahlungsleistung der mindestens einen Quelle kontinuierlich gemessen wird.

24. Verfahren nach einem der Ansprüche 14 bis 23, bei dem die Strahlungsleistung eines von der Quelle ausgehenden und an einem ersten Ort auftreffenden elektromagnetischen Strahls gemessen wird, wobei der elektromagnetische Strahl entlang einem ersten Strahlengang ein erstes optisches Modul mit mindestens einer optischen Eigenschaft, bspw. einen Bandpassfilter, passiert, und bei dem ein Teil des zu messenden elektromagnetischen Strahls entlang einem von dem ersten Strahlengang abgezweigten, zweiten Strahlengang, an dem die Montier- bzw. Fotodiode angeordnet ist, geführt wird, wobei der zweite Strahlengang ein zweites optisches Modul, das im wesentlichen dieselbe optische Eigenschaft wie das erste optische Modul aufweist, bspw. einen Bandpassfilter, aufweist.

25. Verfahren nach einem der Ansprüche 14 bis 24, bei dem eine Umgebungslichtkompensation durchgeführt wird.
